**Europäisches Patentamt**

**European Patent Office**

**Office européen des brevets**

(19)

(11)  **EP 1 489 455 A1**

(12)  **EUROPEAN PATENT APPLICATION**
published in accordance with Art. 158(3) EPC

(43) Date of publication:
22.12.2004 Bulletin 2004/52

(51) Int Cl.⁷: **G02F 1/1339**

(21) Application number: 03712975.6

(86) International application number:
**PCT/JP2003/003699**

(22) Date of filing: 26.03.2003

(87) International publication number:
**WO 2003/081328 (02.10.2003 Gazette 2003/40)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 26.03.2002 JP 2002086048
04.04.2002 JP 2002102848
20.06.2002 JP 2002179970

(71) Applicant: **SEKISUI CHEMICAL CO., LTD.**
**Osaka-shi, Osaka 530-8565 (JP)**

(72) Inventors:
• OGUCHI, Yoshiyuki,
c/o Sekisui Chemical Co., Ltd.
Koka-gun, Shiga 528-8585 (JP)
• UEDA, Michihisa, c/o Sekisui Chemical Co., Ltd.
Mishima-gun, Osaka 618-8589 (JP)

(74) Representative: **Hubert, Philippe et al**
**Cabinet Beau de Loménie**
**158, rue de l'Université**
**75340 Paris Cédex 07 (FR)**

(54)  **METHOD FOR MANUFACTURING LIQUID CRYSTAL DISPLAY DEVICE, SUBSTRATE FOR LIQUID CRYSTAL DISPLAY DEVICE, METHOD FOR MANUFACTURING SUBSTRATE FOR LIQUID CRYSTAL DISPLAY DEVICE, AND SPACER PARTICLE DISPERSION**

(57)    In accordance with the present invention, it is possible to provide the method for manufacturing a liquid crystal display, a substrate for liquid crystal display, a method for manufacturing the substrate for a liquid crystal display, and the dispersion of spacer particles, in which a spacer particle can be precisely located at an arbitrary position on a substrate by an ink-jet method.

The present invention relates to a method for manufacturing a liquid crystal display, wherein spacer particles are located at an arbitrary position on a substrate by ejecting a dispersion of spacer particles by an ink-jet method, a diameter $D_1$ of an adhered droplet of said dispersion of spacer particles, having adhered to said substrate, and a diameter $D_2$ of the adhering spacer particles, remaining after the said dispersion of spacer particles is evaporated, satisfying a relationship of Equation (1).

$$D_2 < (D_1 \times 0.5) \qquad (1)$$

Fig.1

**Description**

TECHNICAL FIELD

The present invention relates to a method for manufacturing a liquid crystal display, a substrate for a liquid crystal display, a method for manufacturing a substrate for a liquid crystal display, and a dispersion of spacer particles, in which a spacer particle can be precisely located at an arbitrary position on a substrate by an ink-jet method.

BACKGROUND ART

Currently, a liquid crystal display is widely used to personal computers, portable electronics and the like.

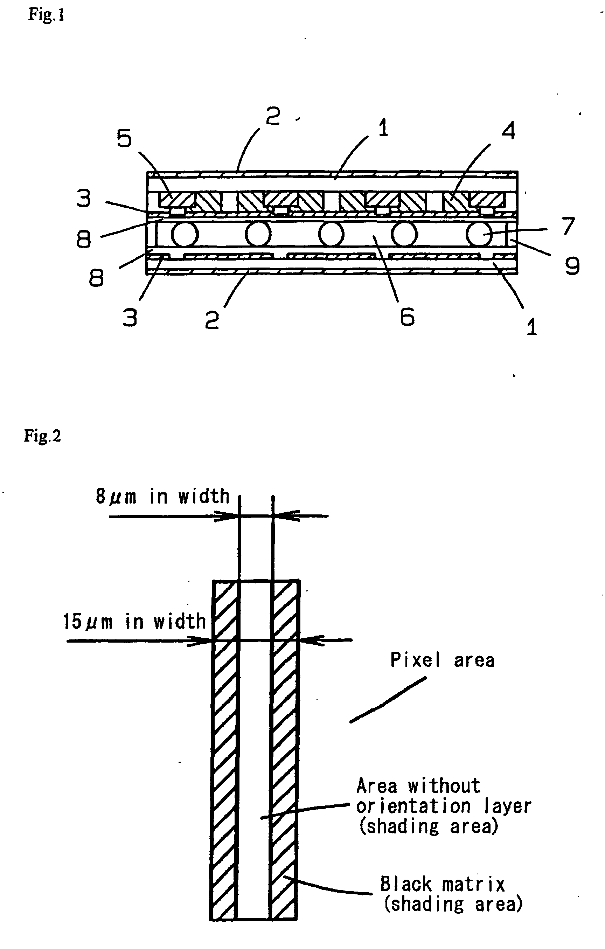

Fig.1 is a sectional view showing an example of a liquid crystal display. As shown in Fig.1, generally, a liquid crystal display has a constitution in which two transparent substrates 1, respectively, on which a transparent electrode 3, an orientation layer 8, a color filter 4 and a black matrix 5 are located inside and a polarizer 2 is located outside, are located on opposed sides through a sealing material 9 installed at the peripheral, and liquid crystal 6 is filled into a gap formed and sealed. And, the transparent substrate 1 is further divided into a pixel area to be a display section provided with a pixel electrode and a shading area not provided with a pixel electrode. In this liquid crystal display, spacer particles 7 are used for the purpose of regulating a spacing of two transparent substrates 1 and maintaining a proper thickness (cell gap) of a liquid crystal layer.

As a method for locating the spacer particle 7, conventionally, there has been used a method for spraying the spacer particles in a random fashion and uniformly on a substrate provided with a pixel electrode. However, in this method, the spacer particles are located also on a pixel electrode, namely, a display section of'a liquid crystal display. Generally, since a spacer particle is made of synthetic resin or glass, when a spacer is located on a pixel electrode, there was a problem that a so-called depolarization phenomenon, in which polarized light is disturbed and loses a polarization property, arose and therefore the spacer portion causes light leakage, or orientation of liquid crystal on the spacer surface is disturbed to cause light leakage and display quality might deteriorate because of degradation of contrast and color tone. Particularly, in a TFT liquid crystal display, a serious problem that a TFT device was damaged when pressure was applied to a substrate might arise.

For this problem, attempt has been made to overcome such a problem by locating the spacer particle on an area other than a pixel area which is a display section of a transparent substrate, namely, only in a shading area. For example in Japanese Kokai Publication Hei-4-198919, there is disclosed a method in which after an opening of a mask having an opening and a shading area are oriented, the spacer particles are located only at the opening. And, in Japanese Kokai Publication Hei-6-258647, there is disclosed a method in which after allowing a photosensitive material to adsorb spacer particles electrostatically, the spacer particles are transferred to a transparent substrate. However, in these methods, since it is necessary to bring a mask or a photosensitive material into contact directly with a substrate, there was a problem that an orientation layer on a substrate might be damaged to cause the degradation of display quality.

And, in Japanese Kokai Publication Hei-10-339878, there is disclosed a method in which by spraying charged spacer particles on an pixel electrode, to which the voltage of the same polarity is applied, on a substrate, spacer particles are located on a shading area by virtue of electrostatic repulsive force. However, in this method, there was a problem that because an electrode, which has a configuration along a pattern to be located, is required, it is impossible to completely locate the spacer particles at arbitrary position and a liquid crystal display of type which this method is applicable to was limited.

On the other hand, in Japanese Kokai Publication Sho-57-58124, there is disclosed a method for locating a dispersion of spacer particles on a substrate using an ink-jet printer. Since in this method, it was possible to locate a spacer without directly contacting a substrate in any position and in any pattern, this method was considered to be extremely effective. However, in recent years, as more precise, downsized and diversified electronic equipment has been developed, high performances such as a display downsized and having high contrast have been also required for a liquid crystal display. Therefore, a width of a shading area on which spacer particles are located becomes about 10 to 30 µm, and in order to locate the spacer particles selectively on such a narrow area, an extremely high ejection accuracy of an ink-jet system has been required and in addition several problems have arisen.

The first problem is that it is impossible to control a size of a droplet ejected by a ink-jet method so as to be smaller than a size of area on which spacers are to be located. Generally, a diameter of a droplet having adhered after a droplet ejected by a ink-jet method has adhered to the substrate is about 40 to 200 µm. When a droplet size is further reduced, a diameter of a nozzle hole must be reduced, but since the diameter of a nozzle hole of a current ink-jet system is about 20 µm at the lowest and a particle diameter of the spacer particle is about 2 to 10 µm, further smaller nozzle hole diameter will result in clogging of a nozzle or unstable ejection.

As one method for accommodating the droplet ejected by a ink-jet method in a predetermined section (position) accurately, there is studied a method for controlling a wetting property of a predetermined section of a surface receiving the ejection of a droplet with respect to a droplet. For example, as a ejection liquid of a ink-jet system, an aqueous solution is frequently used, but such an aqueous solution has a characteristic of spreading over a high polar surface receiving the ejection of a droplet, such as a metal surface, with the high polar surface receiving the ejection of a droplet wetted, but not spreading over a low polar surface receiving the ejection of a droplet, such as a resin surface, with the low polar surface receiving the ejection of a droplet wetted.

As an example of utilizing such a characteristic, for example in Japanese Kokai Publication Hei-6-347637, there is disclosed a method for using a corresponding ink having a color only in a specified pixel area on a substrate provided with a pixel area and a shading area as a color filter of a liquid crystal display is manufactured. In this method, a water repellent section is formed in a shading area on the substrate by a photoresist method, and it is considered that this method can be applied similarly to the case where the spacer particle is located using a ink-jet system. On the substrate of a liquid crystal display, the so-called orientation layer, for example, a polyimide resin film is generally formed in order to regulate an orientation state of liquid crystal and the spacer particles are located on this orientation layer. When the spacer particles are located on the substrate by a method disclosed in Japanese Kokai Publication Hei-6-347637, it is thought, for example, that a coat of photosensitive alkali-soluble resin such as an acrylic acid copolymer and the like is formed on the orientation layer, and by applying photolithography treatment to the coated orientation layer, only the surface of the orientation layer in the position at which the spacer particle is chosen to be located, is brought into a high polar state. However, actually, a rubbing process by nylon or rayon is applied to the surface of the orientation layer in order to regulate the direction of orientation of liquid crystal and it is extremely difficult to apply photolithography treatment to the surface of the orientation layer, thus processed precisely. Further, since the high polar coat exists in convex form on the orientation layer, when the high polar coat is partially formed and then the rubbing process is applied, the high polar coat on the surface of the orientation layer, which is essentially low in adhesion, will peels off and therefore it becomes impossible to locate the spacer particles selectively in the predetermined section. Thus, in actuality, it was technologically difficult to a considerable degree to form an area having the polarity differing from a coat of the orientation layer on the coat of the orientation layer, which needs a special state of the surface.

The second problem is the dispersibility of the spacer particle in the dispersion of spacer particles. In a piezo ink-jet system which is suitably used for ejecting the dispersion of spacer particles in several kinds of ink-jet systems, it is said that the surface tension of liquid ejected is favorably 25 to 55 mN/m. But, since the conventional spacer particles are generally premised on being dispersed in the medium having a surface tension of 30 mN/m or less such as lower alcohols, Freon or water, they are hard to be dispersed in a medium having a relatively high surface tension, which is suitable for ink-jet. In Japanese Kokai Publication 2000-347191, there is disclosed a method for coating the surface of spacer particle with a hydrophobic compound using the adsorption effect of the spacer particle, but it is difficult to disperse even such a coated particle in the form of complete single particle in a medium having a high surface tension. And, since a particle with a hydrophobic surface has a low affinity for the orientation layer on the substrate, the adhesion thereof is not sufficient and the located spacer particle may move within a liquid crystal cell due to an impact to damage the orientation layer. Further, there is a problem that by a coating technique based on an adsorption effect, it is difficult to fix completely a hydrophobic compound on the surface of the spacer particle, and therefore a part of the hydrophobic compound is eluted into ink during storage and when this elution is ejected with ink on the substrate, it covers the orientation layer, or the hydrophobic compound is eluted in liquid crystal in a liquid crystal cell, leading to a defect of display quality of the liquid crystal display. Further, it is necessary to prevent light leakage due to abnormal orientation of liquid crystal around the spacer particle which has overrun on the pixels, but introduction of a hydrophobic functional group, which is known to function effectively for controlling the abnormal orientation of liquid crystal, is opposed to dispersing the spacer particle in the form of single particle in the medium for ink-jet ink. Thus, properties required for the spacer particle are very complicated and currently it has been difficult to satisfy all requirements while maintaining excellent dispersibility.

SUMMARY OF THE INVENTION

It is an object of the present invention to provide a method for manufacturing a liquid crystal display, a substrate for a liquid crystal display, a method for manufacturing a substrate for a liquid crystal display, and a dispersion of spacer particles, in which a spacer particle can be precisely located at an arbitrary position on a substrate by an ink-jet method.

A first aspect of the present invention pertains to a' method for manufacturing a liquid crystal display, wherein spacer particles are located at an arbitrary position on a substrate by ejecting a dispersion of spacer particles by an ink-jet method, a diameter $D_1$ of an adhered droplet of said dispersion of spacer particles, having adhered to said substrate, and a diameter $D_2$ of the adhering spacer particles, remaining after the said dispersion of spacer particles is evaporated, satisfying a relationship of Equation (1).

$$D_2 < (D_1 \times 0.5) \tag{1}$$

In the method for manufacturing a liquid crystal display according to the first aspect of the present invention, it is preferred that the surface temperature of a substrate at the time when a dispersion of spacer particles adheres to the substrate is at least 20°C lower than a boiling point of a liquid having the lowest boiling point among liquids contained in said dispersion of spacer particles, and it is preferred that the surface temperature of a substrate at the time when a dispersion of spacer particles adheres to the substrate is at least 20°C lower than a boiling point of a liquid having the lowest boiling point among liquids contained in said dispersion of spacer particles, and the surface temperature of a substrate is 90°C or less during a time period until the dispersion of spacer particles is completely evaporated. And, it is preferred that the above-mentioned dispersion of spacer particles comprises a medium containing a liquid having a boiling point of less than 100°C in an amount of 10 to 80% by weight and spacer particles, and the content of said spacer particle is 0.05 to 5% by weight, and it is preferred that the above dispersion of spacer particles comprises a medium containing a liquid having a boiling point of less than 100°C in an amount of 10 to 80% by weight and a liquid having a boiling point of 150°C or more in an amount of 80 to 10% by weight, and spacer particles, and the content of said spacer particle is 0.05 to 5% by weight. Further, the above-mentioned dispersion of spacer particles preferably has a contact angle of 25 to 70° relative to an orientation layer on a substrate.

A second aspect of the present invention pertains to a substrate for a liquid crystal display, wherein a color filter comprising a pixel area arrayed in accordance with a given pattern and a shading area defining said pixel area is formed, an orientation layer, a contact angle of which relative to the dispersion of spacer particles is θb, being present in an area representing said pixel area and, an area, a contact angle of which relative to the dispersion of spacer particles is θa, being present at least in a part of an area representing said shading area, and said θa and said θb satisfying a relationship expressed by Equation (2).

$$\theta a < \theta b \tag{2}$$

Also, a method for manufacturing the substrate for a liquid crystal display according to a second aspect of the present invention, wherein after an orientation layer, a contact angle of which relative to the dispersion of spacer particles is θb, is uniformly formed on the whole surface of a substrate, by applying non-contact energy irradiation to a position at which the spacer particle is chosen to be locate, the orientation layer in the position is removed or modified to bring a contact angle relative to the dispersion of spacer particles into θa, constitutes the present invention.

A method for manufacturing the substrate for a liquid crystal display according to the second aspect of the present invention, wherein a photosensitive polyimide resin precursor or a photosensitive polyimide resin is uniformly applied to a substrate having a surface, a contact angle of which relative to the dispersion of spacer particles is θa, and by exposing the photosensitive polyimide film via the medium of a mask and developing the film, an orientation layer comprising polyimide resin is formed in the form of a pattern on the surface of the substrate other than the position at which the spacer particle is chosen to be locate and a contact angle of the surface of said orientation layer relative to the dispersion of spacer particles is brought into θb, also constitutes the present invention.

A method for manufacturing a liquid crystal display using the substrate for a liquid crystal display according to the second aspect of the present invention, wherein the dispersion of spacer particles is ejected onto the area where a contact angle of said substrate for a liquid crystal display relative to the dispersion of spacer particles is θa to locate the spacer particles, also constitutes the present invention.

A third aspect of the present invention pertains to a dispersion of spacer particles, which comprises spacer particles in which a vinyl-based thermoplastic resin, formed by free radical polymerizing vinyl-based monomers having a hydrophilic functional group and/or an alkyl group having 3 to 22 carbon atoms, is combined with the surface of an inorganic fine particle and/or an organic fine particle by graft polymerization; and a medium comprising water and/or a hydrophilic organic solvent and having the surface tension of 25 to 50 mN/m at 20°C, said spacer particles being dispersed in the form of a single particle in said medium. The above-mentioned vinyl-based monomer preferably contains a vinyl-based monomer having a hydrophilic functional group in an amount of 30 to 80% by weight and a vinyl-based monomer having an alkyl group having 3 to 22 carbon atoms in an amount of 20 to 60% by weight. And, the above-mentioned hydrophilic functional group is preferably at least one species selected from the group consisting of hydroxyl group, carboxyl group, sulfonyl group, phosphonyl group, amino group, amide group,' ether group, thiol group and thioether group.

BRIEF DESCRIPTION OF THE DRAWING(S)

Fig.1 is a sectional view showing an example of a liquid crystal display. Fig.2 is a schematic view showing a position, where a spacer particle is located, on a substrate used in Examples 7 and 8. In these drawings, 1 indicates a transparent substrate, 2 indicates a polarizer, 3 indicates a transparent electrode, 4 indicates a color filter, 5 indicates a black matrix, 6 indicates liquid crystal, 7 indicates spacer particle, 8 indicates an orientation layer and 9 indicates a sealing material.

DETAILED DISCLOSURE OF THE INVENTION

Hereinafter, the present invention will be described in detail.

The first aspect of the present invention pertains to a method for manufacturing a liquid crystal display, wherein spacer particles are located at an arbitrary position on a substrate by ejecting a dispersion of spacer particles by an ink-jet method, a diameter $D_1$ of an adhered droplet of said dispersion of spacer particles, having adhered to said substrate, and a diameter $D_2$ of the adhering spacer particles, remaining after the said dispersion of spacer particles is evaporated, satisfying a relationship of Equation (1).

$$D_2 < (D_1 \times 0.5) \tag{1}$$

This means that after the dispersion of spacer particles has adhered to the substrate, the spacer particles in the dispersion of spacer particles gather in the vicinity of a central portion of the droplet adhering in an evaporating process of the dispersion. Thus, by ejecting the dispersion of spacer particles as liquid droplets having a droplet diameter which can be formed and ejected by the ink-jet method by the ink-jet method, it becomes possible to locate spacer particles in a smaller area than a liquid droplet diameter.

As a result of an intense study, the present inventors have found that the use of a dispersion of spacer particles having a given property and the conduct of a drying process under given conditions after adhering to the substrate allow the diameter $D_1$ of the adhered droplet of the dispersion of spacer particles having adhered to the substrate and the diameter $D_2$ of the adhering spacer particles remaining after the dispersion of spacer particles is evaporated to satisfy a relationship of the above equation (1), and have reached the completion of the first aspect of the present invention.

Further, in this specification, the diameter of the droplet having adhered of the dispersion of spacer particles refers to an outside diameter of a liquid droplet of the dispersion of spacer particles having adhered to the substrate, and the diameter of the adhering spacer particles refers to an outside diameter of an area which the spacer particles, remaining on the substrate in evaporating the dispersion of spacer particles is, adhere to.

The above-mentioned dispersion of spacer particles comprises spacer particles and a medium. The above-mentioned spacer particle is not particularly limited and for example, a particle formed from an inorganic material such as silica and a particle formed from an organic material such as resin are given. Among others, a spacer particle formed from resin is preferred in that it has adequate hardness not to damage an orientation layer formed on a substrate of a liquid crystal display and is easy to follow the change in thickness due to thermal expansion or thermal contraction of the orientation layer, and further is relatively less in move within a cell.

The above-mentioned resin composing the spacer particle can be obtained by polymerizing a monofunctional monomer and/or a polyfunctional monomer. Among others, a copolymer of a monofunctional monomer and a polyfunctional monomer is suitable from the viewpoint of strength. In this case, the portion of the above-mentioned polyfunctional monomer is preferably 50% by weight or less. More preferably, it is 30% by weight or less.

The above-mentioned monofunctional monomer is not particularly limited and includes, for example, styrene derivatives such as styrene, $\alpha$-methylstyrene, p-methylstyrene, p-chlorostyrene and chloromethylstyrene; vinyl esters such as vinyl chloride, vinyl acetate and vinyl propionate; unsaturated nitriles such as acrylonitrile; (meth)acrylate ester derivatives such as methyl (meth)acrylate, ethyl (meth)acrylate, butyl (meth)acrylate, 2-ethylhexyl (meth)acrylate, stearyle (meth)acrylate, ethylene glycol (meth)acrylate, trifluoroethyl (meth)acrylate, pentafluoropropyl (meth)acrylate and cyclohexyl (meth) acrylate. These monofunctional monomers may be used alone or may be used in combination of two or more species.

The above-mentioned polyfunctional monomer is not particularly limited and includes, for example, divinylbenzene, 1,6-hexanediol di(meth)acrylate, trimethylolpropane tri(meth)acrylate, tetramethylolmethane tri(meth)acrylate, tetramethylolpropane tetra(meth)acrylate, diallyl phthalate and isomer thereof, triallyl isocyanurate and derivatives thereof, trimethylolpropane tri(meth)acrylate and derivatives thereof, pentaerythritol tri(meth)acrylate, pentaerythritol tetra(meth)acrylate, dipentaerythritol hexa(meth)acrylate, polyethylene glycol di(meth)acrylate of ethylene glycol di(meth)acrylate, polypropylene glycol di(meth)acrylate of propylene glycol di(meth)acrylate, polytetramethylene glycol di(meth)acrylate, neopentyl glycol di(meth)acrylate, 1,3-butylene glycol di(meth)acrylate, 2,2-bis[4-(methacryloxypolyethoxy)phenyl]propane di(meth)acrylate of 2,2-bis[4-(methacryloxyethoxy)phenyl]propane di(meth)acrylate, 2,2-hydrogenated bis[4-(acryloxypolyethoxy)phenyl]propane di(meth)acrylate and 2,2-bis[4-(acryloxyethoxypolypropoxy)phenyl]propane di(meth)acrylate. These polyfunctional monomers may be used alone or may be used in combination of two or more species.

An initiator is used in the above polymerization. The above-mentioned initiator is not particularly limited and for example, organic peroxides such as benzoyl peroxide, lauroyl peroxide, o-chlorobenzoyl peroxide, o-methoxybenzoyl peroxide, 3,5,5-trimethylhexanoyl peroxide and t-butylperoxy-2-ethylhexanoate and di-t-butyl peroxide; and azo compounds such as azobis(isobutyronitrile), azobis(cyclohexacarbonitrile) and azobis(2,4-dimethylvaleronitrile) are given. Preferably, an amount of the above initiator to be used is usually 0.1 to 10 parts by weight per 100 parts by weight of a polymerizable monomer.

A method for producing spacer particles by polymerizing the above-mentioned monomer is not particularly limited and for example, suspension polymerization, seed polymerization, and dispersion polymerization are given.

The above-mentioned suspension polymerization is a method, in which a monomer composition comprising a polymerizable monomer and an initiator is dispersed in a poor solvent so as to give an intended particle diameter and polymerized. According to the above suspension polymerization, since polydisperse particles having a relatively wide particle size distribution can be obtained, it is possible to produce the spacer particle including a wide variety of particle diameter by conducting a classification operation.

As a disperse medium used for the above suspension polymerization, there is usually used a substance formed by adding a disperse stabilizer to water. As the above-mentioned disperse stabilizer, there are given polymers soluble in a medium such as polyvinyl alcohol, polyvinylpyrrolidone, methyl cellulose, ethyl cellulose, polyacrylic acid, polyacrylamide and poly(ethylene oxide). And, a noionic or ionic surfactant is also appropriately used. The conditions of polymerization of the above-mentioned suspension polymerization vary with species of the initiator and the polymerizable monomer, but usually, suitably, polymerization temperature is 50 to 80°C and polymerization time is 3 to 24 hours.

The above-mentioned seed polymerization is a method in which by allowing the monodisperse seed particle synthesized by soap-free polymerization or emulsion polymerization to absorb further a polymerizable monomer and polymerizing this seed particle, a particle diameter of the particle is expanded to a predetermined diameter. According to the seed polymerization, since monodisperse particles can be obtained without conducting a classification operation, it is possible to produce the spacer particle having a specified particle diameter in large quantity. An organic monomer used in the above seed particle is not particularly limited, but as for the material of the seed particle, it is preferred to use a substance having components close to that of a monomer in conducting seed polymerization in order to inhibit phase separation. For example, a styrene-based monomer is preferred for an aromatic divinyl monomer and an acrylic monomer is preferred for an acrylic multivinyl monomer. Since a particle size distribution of the seed particle is reflected on a particle size distribution after seed polymerization, it is preferably as monodisperse as possible and CV value is preferably 5% or less.

And, in seed polymerization, a disperse stabilizer may also be used as required. As such a disperse stabilizer, polymers soluble in a medium are suitable, and for example, polyvinyl alcohol, polyvinylpyrrolidone, methyl cellulose, ethyl cellulose, polyacrylic acid, polyacrylamide and poly(ethylene oxide) are given. And, a nonionic or ionic surfactant is also appropriately used.

In seed polymerization, it is preferred to add 20 to 100 parts by weight of a polymerizable monomer per 1 parts by weight of seed particles. When the addition amount is less than 20 parts by weight, the strength of the spacer particle to be obtained may become insufficient, and when it is more than 100 parts by weight, a particle size distribution may widen due to particle cohesion during seed polymerization.

The above-mentioned dispersion polymerization is a method, in which by conducting polymerization in a poor solvent system which dissolves a polymerizable monomer but does not dissolve a resin produced and adding a polymer-based disperse stabilizer to this system, a produced polymer is precipitated in the form of particle. According to the dispersion polymerization, since monodisperse particles can be obtained without conducting a classification operation, it is possible to produce the spacer particle having a specified particle diameter in large quantity.

In dispersion polymerization, generally, when a polyfunctional monomer is used, the cohesion of the resulting particle is apt to occur and it is difficult to obtain monodisperse crosslinked particles stably; but it becomes possible to polymerize a monomer containing a crosslinked component by selecting conditions. However, from the viewpoint of cohesion during polymerization or strength, the portion of the polyfunctional monomer is preferably 50% by weight or more with respect to the total monomers. When this portion is less than 50% by weight, since the surface of fine particle formed during polymerization is soft in the medium, impingement between the fine particles causes cohesion and therefore a particle size distribution widens, and further this may result in cohesion body. And, even though monodispersity is retained, it may be difficult to attain adequate fracture strength as a spacer particle when a crosslinking density is low.

In dispersion polymerization, generally, a medium used in polymerization is appropriately determined depending on a polymerizable monomer to be used, but as an organic solvent which is generally suitable, there can be given, for example, alcohols, cellosolves, ketones or hydrocarbon, and further these solvents alone or mixed solvents of these solvents, and another compatible organic solvent or water are given. As an organic solvent used for the mixed solvent, there are given, for example, acetonitrile, N,N-dimethylformamide, dimethyl sulfoxide, ethyl acetate, alcohols such as methanol, ethanol, propanol; cellosolves such as methyl cellosolve, ethyl cellosolve, and the like; and ketones such as acetone, methyl ethyl ketone, methyl butyl ketone, 2-butanone.

The above-mentioned spacer particle preferably has compressive modulus of elasticity (10% K value) of 2000 to 15000 MPa at 10% deformation. When the compressive modulus of elasticity is less than 2000 MPa, the spacer particle may be deformed by press pressure in assembling a display device and therefore a proper gap may not be maintained. When it is more than 15000 MPa, the spacer particle may damage an orientation layer on the substrate to cause display anomalies in incorporating it in a display device. In addition, the above 10% K value can be determined, for example, by using Micro Compression Testing Machine (PCT-200 manufactured by SHIMADZU CORPORATION) according to Japanese Kouhyou Publication Hei-6-503180 and measuring the load which deforms the fine particle by 10% with a flat end face of a diamond column of 50 $\mu$m in diameter.

The above spacer particle may be colored in order to improve contrast of a display device. As a method for coloring the above spacer particle, there are given, for example, a method for containing carbon black, disperse dye, acid dye, basic dye and metal oxide; and a method in which an organic film is formed on the surface of spacer particle and this film is decomposed or carbonized at elevated temperatures. Further, when a material, composing a spacer particle, itself has a color, it may be used as is without coloring.

With respect to the above spacer particle, an adhesive layer may be provided for the surface or surface modification for preventing the orientation of adjacent liquid crystal from being disturbed may be applied to the surface. As a method for applying the above surface modification, there are given a method for modifying by depositing resin on the surface of the spacer particle as disclosed in Japanese Kokai Publication Hei-1-247154; a method for modifying by reacting a compound which can react with a functional group on the surface of spacer particle as disclosed in Japanese Kokai Publication Hei-9-113915; and a method for graft-polymerizing at the surface of the spacer particle as described in Japanese Kokai Publication Hei-11-223821. Among others, it is preferred to form a surface coating layer chemically combined with the surface of a spacer particle because of the less occurrence of problems of peeling of the surface layer or elution of the surface layer into liquid crystal in a cell of a liquid crystal display, and for example, a method for graft-polymerizing at the surface by reacting a reducing group on the surface of a spacer particle with an oxidizing agent to produce a free radical is preferred in that it is possible to form a surface layer having a high density and an sufficient thickness.

And, on the surface of a fine particle, there may be formed a surface coating layer formed by chemically combining securely a vinyl-based thermoplastic resin, formed by polymerizing vinyl-based monomers, with the surface of a fine particle through graft polymerization. Such a surface coating layer is preferred because of the less occurrence of problems such as peeling or elution of the surface coating layer in ink of ink-jet method or a cell of a liquid crystal display.

The vinyl-based monomer composing the above vinyl-based thermoplastic resin is not particularly limited and includes, for example, vinyl-based monomers having hydroxyl group such as 2-hydroxyethyl (meth)acrylate, 1,4-hydroxybutyl (meth)acrylate, (poly)caprolactone-modified hydroxyethyl (meth)acrylate, allyl alcohol and glycerin mono allyl ether; acrylic acids and $\alpha$-alkyl derivatives or $\beta$-alkyl derivatives thereof such as (meth)acrylic acid, $\alpha$-ethyl acrylic acid and crotonic acid; unsaturated dicarboxylic acids such as fumaric acid, maleic acid, citraconic acid and itaconic acid; vinyl-based monomers having carboxylic groups such as derivatives of mono-2-(meth)acryloyloxyethyl ester of the above unsaturated dicarboxylic acids; vinyl-based monomers having a sulfonyl group such as t-butylacrylamidesulfonic acid, styrenesulfonic acid and 2-acrylamido-2-methyl propane sulfonic acid; vinyl-based monomers having a phosphonyl group such as vinyl phosphate and 2-(meth)acryloyloxyethyl phosphate; vinyl-based monomers having an amino group like amines having acryloyl groups such as dimethylaminoethyl methacrylate and diethylaminoethyl methacrylate; vinyl-based monomers having ether groups such as terminal alkyl ether of (poly)ethylene glycol (meth) acrylate, terminal alkyl ether of (poly)propylene glycol (meth)acrylate and tetrahydrofurfuryl (meth)acrylate; vinyl-based monomers having an amide group such as (meth)acrylamide, methylol(meth)acrylamide and vinylpyrrolidone; (meth) acrylate esters such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, cyclohexyl (meth)acrylate, 2-ethylhexyl (meth) acrylate, lauryl (meth)acrylate, stearyle (meth)acrylate, isostearyle (meth)acrylate, isodecyl (meth)acrylate, tridecyl (meth)acrylate, isobornyl (meth)acrylate, phenyl (meth)acrylate, benzil (meth)acrylate, methyl-$\alpha$-chloro (meth)acrylate and glycidyl (meth)acrylate; unsaturated nitriles such as acrylonitrile and methacrylonitrile; maleimides such as phenylmaleimide and cyclohexylmaleimide; vinyl esters such as vinyl acetate and vinyl propionate; vinyl ethers such as ethyl vinyl ether and butyl vinyl ether; vinyl halides such as vinyl chloride and vinyl bromide; vinyl-based monomers, each of which has at least one polymerizable unsaturated double bond in a molecule, such as olefins like ethylene, propylene, 1-butene, 2-butene and butadiene, and styrene and derivatives thereof like styrene and α-methylstyrene. These vinyl-based monomers may be used alone or may be used in combination of two or more species.

The content of the above spacer particle in the above dispersion of spacer particles is preferably 0.05 to 5% by weight. When the content is less than 0.05% by weight, the probability of not containing the spacer particle in an ejected droplet increases. When it is more than 5% by weight, a nozzle of an ink-jet system may become apt to clog or number of spacers contained in a droplet of the dispersion having adhered becomes too many and therefore the spacer particle may become less prone to move during the course of drying. The content is more preferably 0.1 to 2% by weight.

The above-mentioned spacer particles are preferably dispersed in the form of a single particle in the dispersion of spacer particles. When cohesion particles are present in the dispersion of spacer particles, not only they cause the reduction in ejection accuracy, but also they might cause clogging of a nozzle of an ink-jet system in an extreme case.

The above-mentioned medium of the dispersion of spacer particles is not particularly limited as long as being liquid at room temperature and among others, water-soluble or hydrophilic liquid is preferred. Generally, a head of an ink-jet system trends to be able to eject a liquid stably in the case of using hydrophilic liquid. When a highly hydrophobic organic solvent is used as the medium, the medium may affect a member composing a head or may elute a part of adhesives, which bond the member. The above-mentioned medium should not have an orientation layer-contaminating property of penetrating into the orientation layer formed on a substrate or dissolving the orientation layer. Generally, the above orientation layer comprises polyimide resin and controls the orientation of liquid crystal by being subjected to rubbing of the surface.

As the above-mentioned water-soluble or hydrophilic liquid, there are given, for example, in addition to water, monoalcohols such as ethanol, n-propanol, 2-propanol, 1-butanol, 2-butanol, 1-methoxy-2-propanol, furfuryl alcohol, tetrahydrofurfuryl alcohol, and the like; polymers of ethylene glycol such as ethylene glycol, diethylene glycol, triethylene glycol, tetraethylene glycol, and the like; lower monoalkyl ethers such as monomethyl ether, monoethyl ether, monoisopropyl ether, monopropyl ether and monobutyl ether of ethylene glycol and polymers of ethylene glycol, respectively; lower dialkyl ethers such as dimethyl ether, diethyl ether, diisopropyl ether, dipropyl ether, and the like; alkyl esters such as monoacetate, diacetate, and the like; polymers of propylene glycol such as propylene glycol, dipropylene glycol, tripropylene glycol, tetrapropylene glycol, and the like; lower monoalkyl ethers such as monomethyl ether, monoethyl ether, monoisopropyl ether, monopropyl ether and monobutyl ether of propylene glycol and polymers of propylene glycol, respectively; lower dialkyl ethers such as dimethyl ether, diethyl ether, diisopropyl ether, dipropyl ether, and the like; alkyl esters such as monoacetate, diacetate, and the like; diols such as 1,3-propanediol, 1,2-butanediol, 1,3-butanediol, 1,4- butanediol, 3-methyl-1,5-pentanediol, 3-hexene-2,5-diol, 1,5-pentanediol, 2,4-pentanediol, 2-methyl-2,4-pentanediol, 2,5-hexanediol, 1,6-hexanediol, neopentyl glycohol, and the like; ether derivatives of diols; acetate derivatives of diols; polyhydric alcohols or ether derivatives thereof such as glycerin, 1,2,4-butanetriol, 1,2,6-hexanetriol, 1,2,5-pentanetriol, trimethylol propane, trimethylol ethane, pentaerythritol, and the like; acetate derivatives; dimethyl sulfoxide, thiodiglycol, N-methyl-2-pyrrolidone, N-vinyl-2-pyrrolidone, γ-butyrolactone, 1,3-dimethyl-2-imidazolidine, sulfolane, formamide, N,N-dimethylformamide, N,N-diethylformamide, N-methylformamide, acetamide, N-methylacetamide, α-terpineol, ethylene carbonate, propylene carbonate, bis(β-hydroxyethyl)sulfone, bis(β-hydroxyethyl) urea, N,N-diethylethanolamine, abietynol, diacetone alcohol and urea.

Preferably, the above-mentioned medium of the dispersion of spacer particles contains a liquid having a boiling point of less than 100°C at an atmospheric pressure of 1 atm. Since such a liquid volatilizes at relatively low temperature as the dispersion of spacer particles is evaporated after being ejected onto the substrate, a drying temperature may be set low. When the drying temperature is set low, it is possible to inhibit the medium'from contaminating an orientation layer in evaporating the medium to impair the picture quality of display of a liquid crystal display. More preferably, the medium contains an organic solvent having a boiling point of 70°C or more and less than 100°C. As such an organic solvent, there are given lower monoalcohols such as ethanol, n-propanol, 2-propanol and the like, and acetone.

Preferably, the above-mentioned liquid having a boiling point of less than 100°C has the surface tension of 25 mN/m or less at 20°C. Generally, an ink-jet system exhibits good ejection accuracy when the surface tension of a liquid to be ejected is 25 to 50 mN/m. On the other hand, when the surface tension of a droplet of the dispersion ejected onto a substrate is high, it is easier to move the spacer particle during the course of drying. When the surface tension of the liquid having a boiling point of less than 100°C is 25 mN/m or less, at the moment when the dispersion is ejected, the surface tension of the dispersion of spacer particles can be set relatively low and therefore good ejection accuracy is attained, and on the other hand after the moment when the dispersion adheres to the substrate, since the liquid volatilizes faster than another components in the dispersion of spacer particles, the surface tension of the dispersion becomes large and therefore the spacer becomes apt to move.

The content of the above-mentioned liquid having a boiling point of less than 100°C in the above dispersion of spacer particles is preferably 10 to 80% by weight. When this content is less than 10% by weight, an evaporating rate of the dispersion becomes slow in a relatively low drying temperature applied in the method for manufacturing a liquid crystal display according to the first aspect of the present invention and therefore production efficiency may be reduced, and when it is more than 80% by weight, the dispersion of spacer particles adjoining the nozzle of the ink-jet system becomes apt to evaporate and therefore an ejecting property of the ink-jet may be impaired, and the dispersion of spacer particles becomes apt to evaporate in preparing the dispersion of spacer particles or in a tank and therefore the possibility of producing cohesion spacers increases.

Preferably, the above-mentioned medium of the dispersion of spacer particles contains a liquid having a boiling point of 150°C or more at an atmospheric pressure of 1 atm. Such a liquid prevents the dispersion of spacer particles from evaporating excessively in the neighborhood of the nozzle of the ink-jet system to reduce the ejection accuracy or inhibits the dispersion of spacer particles from evaporating in preparing the dispersion of spacer particles or in a tank to produce cohesion spacers. More preferably, the medium contains a liquid having a boiling point of 150°C or more and 200°C or less. As such a liquid, there are given ethers of lower alcohol such as ethylene glycol, ethylene glycol monomethyl ether, ethylene glycol dimethyl ether and the like.

Preferably, the above-mentioned liquid having a boiling point of 150°C or more has the surface tension of 30 mN/m or more at 20°C. When the surface tension of the liquid having a boiling point of 150°C or more is 30 mN/m or more, after the moment when a droplet of the dispersion of spacer particles adheres to the substrate, the liquid having a lower boiling point volatilizes earlier and then the surface tension of the dispersion of spacer particles is kept high and therefore the spacer becomes apt to move.

The content of the above-mentioned liquid having a boiling point of 150°C or more in the above dispersion of spacer particles is preferably 10 to 80% by weight. When this content is less than 10% by weight, the reduction in ejection accuracy or the production of cohesion spacers due to the evaporation of the dispersion of spacer particles may become apt to occur, and when it is more than 80% by weight, it takes significantly much time to dry and therefore production efficiency is reduced and in addition to this the degradation of the display picture quality of a liquid crystal display due to the contamination of an orientation layer becomes apt to occur.

The above medium of the dispersion of spacer particles, in addition, may contain, for example, adhesive component for the purpose of imparting adhesion, or may contain a variety of surfactants or viscosity modifiers for the purpose of improving the dispersibility and the mobility of the spacer particle or controlling physical properties such as the surface tension and the viscosity to improve the ejection accuracy. The above medium of the dispersion of spacer particles may also contain one species or two or more species of various additives such as a tackifier, a pH regulator, an antifoamer, an antioxidant, a heat stabilizer, a light stabilizer, an ultraviolet absorber and a coloring agent as required to the extent that achievement of the issues of the present invention is not inhibited.

Preferably, the above dispersion of spacer particles has a contact angle of 25 to 70° relative to an orientation layer on a substrate. When this angle is less than 25°, the spacer particle may be prone to move after a droplet of the dispersion of spacer particles adheres to the substrate, and when it is more than 70°, it may become difficult to eject the dispersion of spacer particles accurately.

Next, a process of ejecting the above dispersion of spacer particles onto a substrate in the method for manufacturing a liquid crystal display according to the first aspect of the present invention will be described.

As an ink-jet system used in the method for manufacturing a liquid crystal display according to the first aspect of the present invention, there can be used a system employing a publicly known method such as a piezo ink-jet method in which liquid is ejected by vibrations of a piezoelectric element and a method thermal ink-jet method in which liquid is ejected with the aid of the expansion of liquid by rapid heating. A diameter of a nozzle hole of the above-mentioned ink-jet system is preferably 20 to 100 μm. If the nozzle hole diameter is less than 20 μm, when the dispersion of spacer particles having a particle diameter of 2 to 10 μm is ejected, ejection accuracy is reduced due to the too small difference between the nozzle hole diameter and the particle diameter, and extremely, the ejection of the dispersion of spacer particles may become impossible due to nozzle clogging. When it is more than 100 μm, the precision of locating spacers may become rough since the ejected liquid droplet becomes large and therefore the diameter of a droplet having adhered also becomes large.

A droplet diameter of the dispersion of spacer particles ejected from the nozzle of the above-mentioned ink-jet system is preferably 10 to 80 μm. As a method for controlling the droplet diameter, there is given, for example, a method for optimizing the diameter of a nozzle hole or a method for optimizing electrical signals controlling the ink-jet system. The latter is especially important in the case where an ink-jet system of a piezo ink-jet method is employed. And, a diameter of an adhered liquid droplet to the substrate is preferably 30 to 150 μm. When the diameter is less than 30 μm, the diameter of a nozzle hole must be very small, and therefore a problem arises in terms of nozzle clogging with spacer particles and machining accuracy of a nozzle. When it is more than 150 μm, the precision of locating spacers may become rough.

A substrate used in the method for manufacturing a liquid crystal display according to the first aspect of the present invention is not particularly limited and for example, a substrate, used as panel substrates of usual liquid crystal displays, such as a glass plate and a plastic plate can be used.

In the method for manufacturing liquid crystal displays according to the first aspect of the present invention, the spacer particles are preferably located on the surface of one substrate of two substrates constituting a liquid crystal display. And, the spacer particles on the substrate may be located on a random basis or may be located at specified positions in specific patterns. The above spacer particles are preferably located in a non-display area of the substrate in order to inhibit the reduction in display picture quality resulting from the spacer particle such as light leakage. It is thought that in the above non-display area, a shading layer referred to as a black matrix formed around the pixel and a position of a TFT device in a TFT liquid crystal display are located, but it is preferred to locate the spacer particles in the black matrix portion so as not to break the TFT device. Generally, the number of spacer particles to be located is preferably 50 to 300 per an area of 1 mm square. As far as the spacer particle satisfies the condition of this particle density, it may be located in any part under the black matrix and in any pattern.

Next, there will be described a process of evaporating the medium in the above dispersion of spacer particles after the dispersion of spacer particles has adhered to the substrate in the method for manufacturing a liquid crystal display according to the first aspect of the present invention. In the method for manufacturing a liquid crystal display according to the first aspect of the present invention, the medium in dispersion of spacer particles is evaporated in such a way that a diameter $D_1$ of an adhered droplet of the dispersion of spacer particles immediately after the dispersion of spacer particles ejected from the nozzle of the ink-jet system has adhered to the substrate and a diameter $D_2$ of the adhering spacer particles, remaining after the dispersion of spacer particles is evaporated, satisfy a relationship of Equation (1) .

$$D_2 < (D_1 \times 0.5) \tag{1}$$

In order to gather the spacer particles in the vicinity of a central portion of the adhered droplet in an evaporating process of the dispersion of the spacer particles as described above, it becomes important to set the boiling point and the surface tension of the medium in the dispersion of spacer particles, the contact angle of the dispersion of spacer particles relative to the orientation layer and the concentration of the spacer particle in the dispersion of spacer particles at favorable conditions as described above and also to set a drying temperature and a drying time at favorable conditions. The condition of evaporating the medium rapidly is not preferred in such a way that the medium does not disappear during the spacer particles move on the substrate in the course of drying. On the contrary, when the drying time becomes significantly long, production efficiency of the liquid crystal display is lowered. And, if the medium contacts an orientation layer at elevated temperatures for a long time, this may cause the contamination of an orientation layer to impair the picture quality of display as a liquid crystal display. When the medium become apt to volatilize at room temperature, the dispersion of spacer particles adjoining the nozzle of the ink-jet system becomes apt to evaporate, and therefore an ejecting property of the ink-jet may be impaired and cohesion spacers may be produced in preparing the dispersion of spacer particles or due to evaporation in a tank.

Considering these limiting conditions, as preferred conditions of drying, there is given, for example, that the surface temperature of a substrate at the time when the dispersion of spacer particles adheres to the substrate is at least 20°C lower than a boiling point of a liquid having the lowest boiling point among liquids contained in the dispersion. When the surface temperature of a substrate exceeds a temperature lower than a boiling point of a liquid having the lowest boiling point by 20°C, not only the liquid having the lowest boiling point is rapidly volatilized and therefore the spacer particles cannot move, but also in an extreme case, the whole liquid droplet moves around on the substrate due to a rapid boil of the liquid and therefore the precision of locating spacers may significantly deteriorates.

And, it is preferred that the surface temperature of a substrate is 90°C or less during a time period until the dispersion of spacer particles is completely evaporated. When the surface temperature exceeds 90°C, this may cause the contamination of an orientation layer and picture quality of display of a liquid crystal display may be impaired. More preferably, the surface temperature is 70°C or less. Incidentally, in the present invention, a time when the liquid is completely evaporated refers to a time when a droplet on a substrate disappears.

The substrate, on which the spacer particles are located by such a method, can be used for manufacturing a liquid crystal display by using an opposed substrate and a peripheral sealing material and pressing against to each other under heating, and filling liquid crystal into the gap formed between these substrates.

In accordance with the method for manufacturing a liquid crystal display according to the first aspect of the present invention, since it becomes possible to gather and locate the spacer particles in a smaller area than a liquid droplet diameter having adhered in a process of evaporating the dispersion of spacer particles, it is possible to locate the spacer particles selectively also in a non-display area having an extremely narrow breadth. Thus, in a liquid crystal display manufactured by the method for manufacturing a liquid crystal display according to the first aspect of the present invention, there is not the reduction in display picture quality such as the occurrence of light leakage from a circumference of the spacer.

The second aspect of the present invention pertains to a substrate for a liquid crystal display, on which a color filter comprising a pixel area arrayed in accordance with a given pattern and a shading area defining the above pixel area is formed, and in which an orientation layer, a contact angle of which relative to the dispersion of spacer particles is θb, is present in an area representing the above pixel area and an area, a contact angle of which relative to the dispersion of spacer particles is θa, is present at least in a part of an area representing the above shading area, and the above θa and the above θb satisfy a relationship expressed by Equation (2).

$$\theta a < \theta b \qquad (2)$$

In this specification, an area representing a pixel area refers to an area lies immediately below the pixel area of a color filter when in a state of being assembled into a liquid crystal display, a display screen is horizontally placed with a substrate surface provided with a color filter up, and an area representing a shading area refers to an area lies immediately below the shading area of a color filter. In this specification, a contact angle refers to a static contact angle at a time when after a droplet of an objective liquid (dispersion of spacer particles) is put on a plane, the droplet ceases to spread.

When the substrate for a liquid crystal display according to the second aspect of the present invention is used, it is possible to spread the ejected dispersion of spacer particles over the shading area with the shading area selectively wetted with the dispersion of spacer particles, and therefore it is possible to locate the spacer particles selectively in the shading area. When θb and θa do not satisfy a relationship of Equation (2), it becomes impossible to locate the spacer particle selectively in the shading area.

The above area having a contact angle of θa may be continuously formed in a line in an area representing the shading area or may be formed in the form of discontinuous islands having any shape. And, the area having a contact angle of θa is preferably formed in bounds which is smaller than the area representing the shading area and spaced inside the margins of the area representing the shading area. When the area having a contact angle of θa is formed in contact with the margins of the area representing the shading area, an area, in which orientation of liquid crystal is not controlled, overruns out of the area representing the shading area and a area, in which orientation of liquid crystal is not controlled, is generated in an area representing the pixel area, and therefore this may lead to a defect of the display quality of a liquid crystal display.

The substrate for a liquid crystal display according to the second aspect of the present invention is not particularly limited and a substrate, used as panel substrates of usual liquid crystal displays, such as a glass plate and a plastic plate can be employed. And, a resin thin film for regulating an orientation of the liquid crystal, referred to as an orientation layer, is generally formed on the surface of the substrate for a liquid crystal display according to the second aspect of the present invention. Generally, the above orientation layer comprises polyimide resin and controls the orientation of liquid crystal by being subjected to rubbing of the surface.

A method for manufacturing the substrate for a liquid' crystal display according to the second aspect of the present invention is not particularly limited and includes, for example, a method in which after an orientation layer is once formed, only the orientation layer in the position, at which the spacer particle is chosen to be locate, is processed afterward by way of removal, modification or coating; and a method for forming an orientation layer only in the position at which the spacer particle is chosen not to be locate. These method may be used alone, respectively, or may be used in combination of both species.

As the above-mentioned method in which after an orientation layer is once formed, only the orientation layer in the position, at which the spacer particle is chosen to be locate, is processed afterward by way of removal, modification or coating, there is given, for example, a method in which after an orientation layer, a contact angle of which relative to the dispersion of spacer particles is θb, is uniformly formed on the whole surface of a substrate, by applying non-contact energy irradiation to a position at which the spacer particle is chosen to be located, the orientation layer in the position is removed or modified to bring a contact angle relative to the dispersion of spacer particles into θa. Such a method for manufacturing the substrate for a liquid crystal display according to the second aspect of the present invention also constitutes the present invention.

In the method for manufacturing the substrate for a liquid crystal display of the present invention, it is preferred that an orientation layer is first formed, and by applying rubbing treatment to the surface of this orientation layer, the orientation of liquid crystal is controlled, and then non-contact energy is irradiated to a position at which the spacer particle is chosen to be located.

A method for the above-mentioned irradiation of non-contact energy is not particularly limited as long as it can converge a beam diameter of the energy irradiation so as to be 20 μm or less and cause an orientation layer material such as polyimide resin to decompose, vaporize, burn and oxidize and any method can be employed, but for example, laser irradiation, excimer laser irradiation, corona discharge treatment and low temperature plasma treatment are given. In accordance with these method for the irradiation of non-contact energy, since the orientation layer can be removed or modified without contacting the surface of the orientation layer after the orientation of liquid crystal is controlled by previously applying rubbing treatment to the surface of the orientation layer, an orientation layer, in which orientation of liquid crystal is controlled, cam be relatively easily obtained. These method for the irradiation of non-contact energy may be used alone or may be used in combination of two or more species.

And, the method for coating only the position; at which the spacer particle is chosen to be locate, with the orientation layer is not particularly limited but includes, among others, a method for forming a heterogeneous film on the surface of the orientation layer by treatment techniques such as vapor deposition through the medium of a mask, sputtering, CVD (Chemical Vapor Deposition) and plasma polymerization. These treatment techniques may be used alone or may be used in combination of two or more species.

As the method for forming an orientation layer only in the position at which the spacer particle is chosen not to be locate, there is given, for example, a method, in which a photosensitive polyimide resin precursor or a photosensitive polyimide resin is uniformly applied to a substrate having a surface, a contact angle of which relative to the dispersion of spacer particles is θa, and by exposing the photosensitive polyimide film through the medium of a mask and developing the film, an orientation layer comprising polyimide resin is formed in the form of a pattern on the surface of the substrate other than the position at which the spacer particle is chosen to be locate and a contact angle of the surface of the above orientation layer relative to the dispersion of spacer particles is brought into θb.

Such a method for manufacturing the substrate for a liquid crystal display according to the second aspect of the present invention also constitutes the present invention.

Though this method for manufacturing the substrate for a liquid crystal display of the present invention needs to apply rubbing treatment to the whole surface of a substrate after an orientation layer in the form of a pattern is once formed on the substrate, it has an advantage that even though rubbing treatment is applied after the orientation layer comprising polyimide resin is coated with a high polar film, a problem of peeling of the high polar film does not arise. And, an orientation layer comprising polyimide resin may be formed by depositing a polyimide resin precursor only on an area requiring an orientation layer on the substrate through the medium of a mask provided with a pattern having openings corresponding to areas intended for the formation of the orientation layer by treatment techniques such as vapor deposition, sputtering, CVD and plasma polymerization.

A method for manufacturing a liquid crystal display using the substrate for a liquid crystal display according to the second aspect of the present invention, in which the dispersion of spacer particles is ejected onto the area where a contact angle of the substrate for a liquid crystal display relative to the dispersion of spacer particles is θa to locate the spacer particle, also constitutes the present invention.

The spacer particle and the dispersion of spacer particles, a method for ejecting the dispersion of spacer particles and a method for evaporating a liquid droplet having adhered to a substrate, used in the second aspect of the present invention, is not particularly limited and a conventional substance of method publicly known may be used, but a substance of method used in the method for manufacturing a liquid crystal display according to the first aspect of the present invention is preferably used.

After the spacer particles are located selectively on the substrate for a liquid crystal display according to the second aspect of the present invention by such a method, this substrate and an opposed substrate are pressed against to each other under heating through the medium of a peripheral sealing material, and liquid crystal is filled into the gap formed between these substrates, and therefore a desired liquid crystal display can be obtained.

The substrate for a liquid crystal display according to the second aspect of the present invention can be applied to either a STN type liquid crystal display or a TFT type liquid crystal display.

The above-mentioned STN type liquid crystal display comprises a color filter substrate provided with a color filter and an opposed substrate located on opposite side to the color filter substrate, and the above both substrates have transparent electrodes formed in the form of stripe, and the substrate for a liquid crystal display according to the second aspect of the present invention may be used for any substrate described above.

The above-mentioned TFT type liquid crystal display comprises a color filter substrate provided with a color filter and an opposed substrate located on opposite side to the color filter substrate, and the opposed substrate generally has an array such as TFT device and referred to as an array substrate. Generally, a contact transparent electrode is formed on the color filter substrate, and a device and the transparent electrode are formed on the array substrate, and the substrate for a liquid crystal display according to the second aspect of the present invention may be used for any substrate described above.

If the substrate for a liquid crystal display according to the second aspect of the present invention is used, since the dispersion of spacer particles is ejected onto the area where a contact angle relative to the dispersion of spacer particles is θa with an ink-jet system, it is possible to locate the spacer particles selectively in a non-display area of the substrate with efficiency and high accuracy and to attain a liquid crystal display which exhibits excellent display quality without the occurrence of a depolarization phenomenon resulting from the spacer particle and the reduction in contrast and color tone due to light leakage.

The third aspect of the present invention pertains to a dispersion of spacer particles, which comprises spacer particles in which a vinyl-based thermoplastic resin, formed by free radical polymerizing vinyl-based monomers having a hydrophilic functional group and/or an alkyl group having 3 to 22 carbon atoms, is combine with the surface of an inorganic fine particle and/or an organic fine particle by graft polymerization and a medium composed of water and/or a hydrophilic organic solvent and having the surface tension of 25 to 50 mN/m at 20°C, and in which the spacer particles are dispersed in the form of a single particle in the medium.

The above-mentioned inorganic fine particle used for the dispersion of spacer particles according to the third aspect of the present invention is not particularly limited but include, among others, a silica fine particle and the like. These inorganic fine particles may be used alone or may be used in combination of two or more species. Also, the above-mentioned organic fine particle is not particularly limited but include, among others, a resin fine particle and the like. These organic fine particles may be used alone or may be used in combination of two or more species. Further, the above inorganic fine particle and organic fine particle may be used alone, respectively, or may be used in combination of both species. Among others, a resin fine particle is favorably used since it has the advantages that it has adequate hardness not to damage the orientation layer formed on the substrate of the liquid crystal display and is easy to follow the change in thickness due to thermal expansion or thermal contraction, and further is relatively less in the move of a spacer within a cell.

As resin composing the above resin fine particle, there can be employed, for example, a resin similar to that used for the spacer particle used in the method for manufacturing a liquid crystal display according to the first aspect of the present invention, and the resin fine particle can be obtained in the same method.

In the spacer particles used for the dispersion of spacer particles according to the third aspect of the present invention, a vinyl-based thermoplastic resin, formed by free radical polymerizing vinyl-based monomers having a hydrophilic functional group and/or an alkyl group having 3 to 22 carbon atoms, is combine with the surface of the above-mentioned inorganic fine particle or organic fine particle by graft polymerization.

The above-mentioned hydrophilic functional group is not particularly limited but for example, it is preferably at least one species selected from the group consisting of hydroxyl group, carboxyl group, sulfonyl group, phosphonyl group, amino group, amide group, ether group, thiol group and thioether group. Among others, hydroxyl group, carboxyl group and ether group are more preferred because of less interaction with liquid crystal. These hydrophilic functional groups may be used alone or may be used in combination of two or more species.

The vinyl-based monomer having above hydrophilic functional group is not particularly limited and includes, for example, vinyl-based monomers having hydroxyl group such as 2-hydroxyethyl (meth)acrylate, 1,4-hydroxybutyl (meth)acrylate, (poly)caprolactone-modified hydroxyethyl (meth)acrylate, allyl alcohol and glycerin mono allyl ether; acrylic acids and $\alpha$-alkyl derivatives or $\beta$-alkyl derivatives thereof such as (meth)acrylic acid, $\alpha$-ethyl acrylic acid and crotonic acid; unsaturated dicarboxylic acids such as fumaric acid, maleic acid, citraconic acid and itaconic acid; vinyl-based monomers having carboxylic groups such as derivatives of mono-2-(meth)acryloyloxyethyl ester of the above unsaturated dicarboxylic acids; vinyl-based monomers having a sulfonyl group such as t-butylacrylamidesulfonic acid, styrenesulfonic acid and 2-acrylamido-2-methyl propane sulfonic acid; vinyl-based monomers having a phosphonyl group such as vinyl phosphate and 2-(meth)acryloyloxyethyl phosphate; vinyl-based monomers having an amino group such as dimethylaminoethyl methacrylate and diethylaminoethyl methacrylate; vinyl-based monomers having ether groups such as terminal alkyl ether of (poly)ethylene glycol (meth)acrylate, terminal alkyl ether of (poly)propylene glycol (meth)acrylate and tetrahydrofurfuryl (meth)acrylate; vinyl-based monomers having hydroxyl group and ether group such as (poly)ethylene glycol (meth)acrylate and (poly)propylene glycol (meth)acrylate; and vinyl-based monomers having an amide group such as (meth)acrylamide, methylol(meth)acrylamide and vinylpyrrolidone. These vinyl-based monomers having the hydrophilic functional group may be used alone or may be used in combination of two or more species.

The above-mentioned alkyl group having 3 to 22 carbon atoms is not particularly limited and includes, for example, n-propyl group, i-propyl group, n-butyl group, i-butyl group, t-butyl group, n-pentyl group, n-hexyl group, cyclohexyl group, 2-ethylhexyl group, n-heptyl group, n-octyl group, n-nonyl group, decyl group, undecyl group, dodecyl group, tridecyl group, tetradecyl group, pentadecyl group, nonadecyl group, eicodecyl group, henicocyl group, docosyl group and isobornyl group. These alkyl groups having 3 to 22 carbon atoms may be used alone or may be used in combination of two or more species.

The vinyl-based monomers having above-mentioned alkyl group having 3 to 22 carbon atoms is not particularly limited and for example, ester compounds consisting of (meth)acrylic acid and the above alkyl group having 3 to 22 carbon atoms; ester compounds consisting of vinyl alcohol and the above alkyl group having 3 to 22 carbon atoms; and vinyl ether compounds consisting of a vinyl group and the above alkyl group having 3 to 22 carbon atoms are given. These vinyl-based monomers having an alkyl group having 3 to 22 carbon atoms may be used alone or may be used in combination of two or more species.

The vinyl-based monomer having above hydrophilic functional group and the above vinyl-based monomer having an alkyl group having 3 to 22 carbon atoms may be used alone, respectively, or may be used in combination of both species. Particularly, it is preferred that the vinyl-based monomer, composing the vinyl-based thermoplastic resin, contains the vinyl-based monomer having the above hydrophilic functional group in an amount of 30 to 80% by weight and the vinyl-based monomer having the above alkyl group having 3 to 22 carbon atoms in an amount of 20 to 60% by weight. When the content of the vinyl-based monomer having above hydrophilic functional group in the vinyl-based monomer is less than 30% by weight, it becomes difficult to disperse the obtained spacer particle sufficiently in the form of a single particle in a medium of the dispersion and cohesion spacers become apt to arise, so that stable ejection in an ink-jet system or a formation of an accurate cell gap may becomes difficult. When the is more than 80% by weight, abnormal orientation of liquid crystal may become apt to occur on the surface of a spacer which has overrun into display pixels in forming a cell of a liquid crystal display, leading to the reduction in display quality. And, when the content of the vinyl-based monomer having the above alkyl group having 3 to 22 carbon atoms in the vinyl-based monomer is less than 20% by weight, abnormal orientation of liquid crystal may become apt to occur on the surface of a spacer particle which has overrun into display pixels in forming a cell of a liquid crystal display, leading to the reduction in display quality. When it is more than 60% by weight, the stability of dispersion of the resulting spacer particle in a medium may be reduced.

In addition, when a surface coating layer composed of a vinyl-based thermoplastic resin is formed by combining the vinyl-based thermoplastic resin, formed by free radical polymerizing vinyl-based monomers having the above-mentioned hydrophilic functional group and/or alkyl group having 3 to 22 carbon atoms, with the surface of a fine particle by graft polymerization, in the case where a plurality of vinyl-based thermoplastic resin layers having different compositions are laminated for the purpose of thickening the surface coating layer, use of a preferred vinyl-based monomer, containing the vinyl-based monomer having the above hydrophilic functional group in an amount of 30 to 80% by weight and the vinyl-based monomer having the above alkyl group having 3 to 22 carbon atoms in an amount of 20 to 60% by weight, may be considered only for an outermost vinyl-based thermoplastic resin layer of the surface coating layer. The reason for this is that exerting the function, such as the dispersibility in the medium used for dispersion of spacers or ink of ink-jet method and the inhibition of abnormal orientation of liquid crystal, depends on a state of and around the spacer surface.

In the spacer particle used for the dispersion of spacer particles according to the third aspect of the present invention, the surface coating layer consisting of a vinyl-based thermoplastic resin is formed on the surface of a fine particle by chemically combining securely the above-mentioned vinyl-based thermoplastic resin with the above the surface of a fine particle through graft polymerization. The surface coating layer formed by such a method is preferred because of the less occurrence of problems such as peeling or elution of the surface coating layer in ink of ink-jet method or a cell of a liquid crystal display. Among others, for example as described in Japanese Kokai Publication Hei-11-223821, a method, in which a fine particle having a reducing group on its surface is reacted with an oxidizing agent to produce a free radical at the surface of a fine particle and by graft polymerization originating from this free radical, a surface coating layer consisting of a vinyl-based thermoplastic resin is formed on the surface of a fine particle, is preferred in that it is possible to form a surface coating layer having a high density and an sufficient thickness.

The content of the above spacer particle in the dispersion of spacer particles according to the third aspect of the present invention is preferably 0.05 to 5% by weight. When the content is less than 0.05% by weight, the probability of not containing the spacer particle in an ejected droplet increases. When it is more than 5% by weight, a nozzle of an ink-jet system may become apt to clog or number of spacers contained in a droplet of the dispersion having adhered becomes too many and therefore the spacer particle may become less prone to move during the course of drying. The content is more preferably 0.1 to 2% by weight.

The above-mentioned spacer particles are dispersed in the form of a single particle in the dispersion of spacer particles according to the third aspect of the present invention. When cohesion particles are present in the dispersion of spacer particles, not only they cause the reduction in ejection accuracy, but also they might cause clogging of a nozzle of an ink-jet system in an extreme case.

The medium constituting the dispersion of spacer particles according to the third aspect of the present invention comprises water and/or a hydrophilic organic solvent. Generally, the ink-jet system trends to be able to eject a liquid stably in the case where the medium is water or a hydrophilic organic solvent, and in the case where the medium is a highly hydrophobic organic solvent, there is a problem that a member composing a head is affected by the medium or a part of adhesives, which bond the member, is eluted into the medium.

The above water is not particularly limited and for example, ion-exchanged water, pure water, groundwater, running water and industrial water can be given. These water may be used alone or may be used in combination of two or more species.

The above-mentioned hydrophilic organic solvent is not particularly limited and includes, for example, monoalcohols such as ethanol, n-propanol, 2-propanol, 1-butanol, 2-butanol, 1-methoxy-2-propanol, furfuryl alcohol, tetrahydrofurfuryl alcohol, and the like; polymers of ethylene glycol such as ethylene glycol, diethylene glycol, triethylene glycol, tetraethylene glycol, and the like; polymers of propylene glycol such as propylene glycol, dipropylene glycol, tripropylene glycol, tetrapropylene glycol, and the like; lower monoalkyl ethers such as monomethyl ether, monoethyl ether, monoisopropyl ether, monopropyl ether and monobutyl ether of polymers of ethylene glycol and polymers of propylene glycol; lower dialkyl ethers such as dimethyl ether, diethyl ether, diisopropyl ether and dipropyl ether of polymers of ethylene glycol and polymers of propylene glycol; alkyl esters such as monoacetate and diacetate of polymers of ethylene glycol and polymers of propylene glycol; diols such as 1,3-propanediol, 1,2-butanediol, 1,3-butanediol, 1,4-butanediol, 3-methyl-1,5-pentanediol, 3-hexene-2,5-diol, 1,5-pentanediol, 2,4-pentanediol, 2-methyl-2,4-pentanediol, 2,5-hexanediol, 1,6-hexanediol, neopentyl glycohol, and the like; ether derivatives of diols; acetate derivatives of diols; polyhydric alcohols such as glycerin, 1,2,4-butanetriol, 1,2,6-hexanetriol, 1,2,5-pentanetriol, trimethylol propane, trimethylol ethane, pentaerythritol, and the like; ether derivatives of polyhydric alcohols; acetate derivatives of polyhydric alcohols; dimethyl sulfoxide, thiodiglycol, N-methyl-2-pyrrolidone, N-vinyl-2-pyrrolidone, $\gamma$-butyrolactone, 1,3-dimethyl-2-imidazolidine, sulfolane, formamide, N,N-dimethylformamide, N,N-diethylformamide, N-methylformamide, acetamide, N-methylacetamide, $\alpha$-terpineol, ethylene carbonate, propylene carbonate, bis($\beta$-hydroxyethyl)sulfone, bis($\beta$-hydroxyethyl) urea, N,N-diethylethanolamine, abietynol, diacetone alcohol and urea. These hydrophilic organic solvents may be used alone or may be used in combination of two or more species. And the water and the hydrophilic organic solvent may be used alone or may be used in combination of both species.

The surface tension at 20°C of the medium of the dispersion of spacer particles according to the third aspect of the present invention is 25 to 50 mN/m. When the surface tension goes out of this range, an ejecting property and an ejection accuracy of the dispersion of spacer particles according to the third aspect of the present invention in an ink-jet system become inadequate.

Preferably, the medium of the dispersion of spacer particles according to the third aspect of the present invention contains a liquid having a boiling point of less than 100°C at an atmospheric pressure of 1 atm. Since such a liquid volatilizes at relatively low temperature as the dispersion of spacer particles is evaporated after being ejected onto the substrate, a drying temperature may be set low. When the drying temperature is set low, it is possible to inhibit the medium from contaminating an orientation layer in evaporating the medium to impair the picture quality of display of a liquid crystal display. More preferably, the medium contains an organic solvent having a boiling point of 70°C or more and less than 100°C. As such an organic solvent, there are given lower alcohols such as ethanol, n-propanol, 2-propanol and the like, and acetone.

Preferably, the above-mentioned liquid having a boiling point of less than 100°C has the surface tension of 25 mN/m or less at 20°C. Generally, an ink-jet system exhibits good ejection accuracy when the surface tension of a liquid to be ejected is 25 to 50 mN/m. On the other hand, when the surface tension of a droplet of the dispersion ejected onto a substrate is high, it is easier to move the spacer particle during the course of drying. When the surface tension of the liquid having a boiling point of less than 100°C is 25 mN/m or less, at the moment when the dispersion is ejected, the surface tension of the dispersion of spacer particles can be set relatively low and therefore good ejection accuracy is attained, and on the other hand after the moment when the dispersion adheres to the substrate, since the liquid volatilizes faster than another components in the dispersion of spacer particles, the surface tension of the dispersion becomes large and therefore the spacer becomes apt to move.

The content of the above-mentioned liquid having a boiling point of less than 100°C in the medium of the dispersion of spacer particles according to the third aspect of the present invention is preferably 10 to 80% by weight. When this content is less than 10% by weight, an evaporating rate of the dispersion becomes slow in a relatively low drying temperature and therefore production efficiency may be reduced, and when it is more than 80% by weight, the dispersion of spacer particles adjoining the nozzle of the ink-jet system becomes apt to evaporate and therefore an ejecting property of the ink-jet may be impaired, and the dispersion of spacer particles becomes apt to evaporate in preparing the dispersion of spacer particles or in a tank and therefore the possibility of producing cohesion spacers increases.

Preferably, the medium of the dispersion of spacer particles according to the third aspect of the present invention contains a liquid having a boiling point of 150°C or more at an atmospheric pressure of 1 atm. Such a liquid prevents the dispersion of spacer particles from evaporating excessively in the neighborhood of the nozzle of the ink-jet system to reduce the ejection accuracy or inhibits the dispersion of spacer particles from evaporating in preparing the dispersion of spacer particles or in a tank to produce cohesion spacers. More preferably, the medium contains a liquid having a boiling point of 150°C or more and 200°C or less. As such a liquid, there are given ethers of lower alcohol such as ethylene glycol, ethylene glycol monomethyl ether, ethylene glycol dimethyl ether and the like.

Preferably, the above-mentioned liquid having a boiling point of 150°C or more has the surface tension of 30 mN/m or more at 20°C. When the surface tension of the liquid having a boiling point of 150°C or more is 30 mN/m or more, after the moment when a droplet of the dispersion of spacer particles adheres to the substrate, the liquid having a lower boiling point volatilizes earlier and then the surface tension of the dispersion of spacer particles is kept high and therefore the spacer becomes apt to move.

The content of the above-mentioned liquid having a boiling point of 150°C or more in the dispersion of spacer particles according to the third aspect of the present invention is preferably 10 to 80% by weight. When this content is less than 10% by weight, the reduction in ejection accuracy or the production of cohesion spacers due to the evaporation of the dispersion of spacer particles may become apt to occur, and when it is more than 80% by weight, it takes significantly much time to dry and therefore production efficiency is reduced and in addition to this the degradation of the display picture quality of a liquid crystal display due to the contamination of an orientation layer becomes apt to occur.

The dispersion of spacer particles according to the third aspect of the present invention may contain one species or two or more species of various additives such as a tackifier, a viscosity regulator, a pH regulator, a surfactant, an antifoamer, an antioxidant, a heat stabilizer, a light stabilizer, an ultraviolet absorber and a coloring agent as required to the extent that achievement of the issues of the present invention is not inhibited.

The dispersion of spacer particles according to the third aspect of the present invention can be suitably used to be located at an arbitrary position on a substrate for a liquid crystal display by an ink-jet method. An ink-jet system, which can be employed, is not particularly limited and the above-mentioned system can be employed.

When the dispersion of spacer particles according to the third aspect of the present invention is used, an extremely excellent ejecting property is exhibited in ejecting the dispersion of spacer particles onto a substrate for a liquid crystal display with an ink-jet system and a cell gap can be maintained accurately after drying, and therefore a liquid crystal display, which develops homogeneous display quality, can be attained. Further, there can be attained a liquid crystal display which hardly causes abnormal orientation of liquid crystal on the surface of spacer and develops excellent display quality even when a spacer particle overruns into pixels in a cell of a liquid crystal display.

BEST MODE FOR CARRYING OUT THE INVENTION

Hereinafter, the present invention will be described in more detail by way of examples, but the present invention is not limited to these examples.

(Example 1)

(1) Preparation of spacer particles

In a separable flask, 15 parts by weight of divinylbenzene, 5 parts by weight of isooctyl acrylate and 1.3 parts by weight of benzoyl peroxide as an initiator were put and mixed uniformly. Next, to this mixture, 20 parts by weight of a 3% aqueous solution of polyvinyl alcohol ("GL-03" made by KURARAY CO., LTD.) and 0.5 parts by weight of sodium dodecyl sulfate were charged and stirred well, and then 140 parts by weight of ion-exchanged water was added. The resulting solution was reacted at 80°C for 15 hours under nitrogen flow while being stirred. The resulting fine particles were washed with hot water and acetone, and then classified and the acetone was volatilized to obtain spacer particles. An average particle diameter of the obtained fine particles was 5 $\mu$m and a CV value was 3.0%.

(2) Surface treatment of spacer particles

5 parts by weight of the obtained fine particles was charged to a mixture of 20 parts by weight of dimethyl sulfoxide (DMSO) and 20 parts by weight of hydroxyethyl methacrylate and dispersed with a sonicater, and then the mixture was stirred uniformly. Then, a nitrogen gas was introduced into a reaction system and the mixture was stirred at 30°C for two hours. To this was added 10 parts by weight of a 0.1 mol/liter solution of diammonium cerium nitrate ($[Ce(NH_4)_2](NO_3)_6$) regulated by a 1N aqueous solution of nitric acid and a reaction was continued for 5 hours.

After the completion of polymerization reaction, a reactant was taken out and separated into particles and a reaction solution through filtration using a 3 $\mu$m membrane filter. These particles were adequately washed with ethanol and acetone and then dried under reduced pressure with a vacuum drier to obtain spacer particles surface treated.

(3) Preparation of dispersion of spacer particles

The obtained spacer particles surface treated was taken by an amount required so as to obtain a given concentration and gradually added to the disperse medium having composition shown in Table 1 and dispersed by being adequately stirred while using a sonicater to prepare a dispersion of spacer particles 1. The resulting dispersion of spacer particles 1 was filtered with a stainless screen with mesh size of 10 $\mu$m to remove cohesion spacers and subjected to evaluation test in an ink-jet system.

(4) Location of spacer particles on substrate

The above-mentioned dispersion of spacer particles was ejected onto a substrate of initial temperature shown in Table 2 using an ink-jet system of a piezo ink-jet method, on which a head having a nozzle hole diameter of 30 $\mu$m is mounted.

As a substrate, there was used a substance provided with an orientation layer formed by applying uniformly a polyimide intermediate ("LP-64" made by Toray Industries, Inc.) to a color filter glass substrate, on the surface of which a ITO transparent electrode was provided, using spin coater, drying at 150°C and then baking at 280°C for 90 minutes to cure.

Since a black matrix of 20 μm in width is formed between pixels of a color filter on a color filter substrate, it was selected to locate spacer particles at 150 μm spacing on this black matrix with an ink-jet system. And, the spacer particle was adjusted and located in such a way that a distribution density of the spacer particle is 100 particles/mm$^2$.

When the spacer particles were ejected, a stage was heated by a heater attached to the stage.

In order to dry the dispersion of spacer particles ejected onto a substrate on the stage, the substrate, to which ejection of spacer particles was completed, was immediately shifted to on a hot plate heated to predetermined temperature shown in Table 2 and dried. When a temperature of the substrate at the beginning of the ejection and a temperature of a hot plate for drying were different, the surface temperature of the substrate was gradually elevated.

After visually recognizing that the medium was completely dried, the substrate was allowed to stand at the as-is temperature for 30 minutes.

A color filter substrate in which the spacers were thus located and an opposed substrate were bonded to each other using a peripheral sealing material, and an empty cell with a cell gap of 5 μm was produced by curing the sealing material through heating at 150°C for 1 hour, and after filling liquid crystal into the cell by a vacuum method, a filling port was sealed with an end-sealing material to obtain a liquid crystal display cell.

(5) Evaluation

Surface tension at 20°C and dispersibility of the dispersion of spacer particles, a diameter $D_1$ of an adhered droplet when the dispersion of spacer particles is ejected onto the substrate and a diameter $D_2$ of the adhering spacer particles after evaporation, a property of locating spacer particle, display quality as a liquid crystal display, and purity of liquid crystal were evaluated based on the following measures.

The results of evaluation were shown in Table 2.

(Evaluation of dispersibility of dispersion of spacer particles)

The clogging in filtering the dispersion of spacer particles with a stainless screen having a mesh size of 10 μm and the re-dispersion of the precipitated spacer particles were visually observed and the dispersibility was evaluated according to the following criteria.

⊙ : There was little clogging on the stainless screen and the dispersion of spacer particles passed through it smoothly. And the re-dispersion of the spacer particles was good.

○: The dispersion of spacer particles passed through the stainless screen, but some clogging was found on the stainless screen after filtration. The re-dispersion of the spacer particles was good.

Δ: There was much clogging on the stainless screen and the dispersion of spacer particles did not pass through the screen smoothly, but the dispersion of spacer particles could be filtered at much expense in time. The spacers having precipitated with time were not dispersed again even by shaking the container.

×: Clogging on the stainless screen was serious and the dispersion of spacer particles did not pass through the screen at all. The spacers having precipitated with time were not dispersed again even by shaking the container.

(Evaluation of property of locating spacer particles)

The dispersion of spacer particles was filtered with a stainless screen (mesh size of 10 μm) to remove cohesion spacers and then ejected onto a substrate using an ink-jet system of a piezo ink-jet method, on which a head having a nozzle hole diameter of 30 μm is mounted.

As the above substrate, there was used a substance provided with an orientation layer formed by applying uniformly a polyimide intermediate ("LP-64" made by Toray Industries, Inc.) to a color filter glass substrate, on the surface of which a ITO transparent electrode was provided, using spin coater, drying at 150°C and then baking at 280°C for 90 minutes to cure. Since a black matrix of 20 μm in width is formed between pixels of a color filter on the above color filter substrate, it was selected to locate spacer at 150 μm spacing on this black matrix with an ink-jet system. And, the spacer was adjusted and located in such a way that a distribution density of the spacers is 100 particles/mm$^2$. During the ejection of the above spacer, a substrate of room temperature was placed on a stage and the substrate, to which ejection of spacers was completed, was immediately shifted to on a hot plate heated to 90°C and dried. After visually recognizing that the medium was completely dried, the substrate was allowed to stand at the as-is temperature for 30 minutes. After the spacer particles were located on the substrate by the above-mentioned method, a status of the spacer particles located was observed by a microscope and a property of locating spacer particle was evaluated according to the following criteria.

ⓞ : Each line which the spacer particles are located has an equal distance between lines and is straight, and no light leakage was found.

○: Each line which the spacer particles are located has an equal distance between lines and is straight, but a little light leakage was found.

△: Each line which the spacer particles are located has a different distance between lines and much light leakage was found.

✕: Since the spacer particles were little ejected onto the substrate, they were not located and much light leakage was found.

(Evaluation of display quality of liquid crystal display (1))

○: In a display area, no spacer particles were found and no contamination of an orientation layer was found.

△: In a display area, a few spacer particles were found but contamination of an orientation layer was not found.

△✕: In a display area, a few spacer particles were found and a little light leakage like a stain probably resulting from contamination of an orientation layer was found.

✕: In a display area, many spacer particles were found but light leakage like a stain probably resulting from contamination of an orientation layer was found.

✕✕: In a display area, many spacer particles were found and large light leakage like a stain probably resulting from contamination of an orientation layer was found.

(Evaluation of display quality of liquid crystal display (2))

ⓞ : Overrunning of a spacer particle into a display area was not found.

○: A spacer particle overrun into a display area very slightly.

△: Overrunning of a spacer particle into a display area was found.

✕: Overrunning of a spacer particle into a display area and light leakage resulting from the overrunning was found.

(Evaluation of purity of liquid crystal)

0.1 g of spacer particles was dispersed in 2 ml of liquid crystal (trade name "ZLI-4720-000", made by Merck Ltd.) and a dispersion was allowed to stand at 80°C for 200 hours, and then liquid crystal was recovered and purity of the liquid crystal was measured by gas chromatography.

(Examples 2 to 6, Comparative Examples 1 to 6)

Each test was conducted following the same manner as in Example 1 except for preparing dispersions of spacer particles having the compositions of Table 1 using the spacer particles surface treated prepared in Example 1 and locating the spacer particles on the substrates under conditions shown in Table 2 using the prepared dispersions of spacer particles and evaluating.

By the way, as for the dispersion of spacer particles 5, the medium had high volatility, cohesion spacers were produced on the wall of a container for dispersion treatment and clogging occurred in filtration by a stainless screen.

Table 1

| | | Dispersion of spacer particles | | | | |
|---|---|---|---|---|---|---|
| | | 1 | 2 | 3 | 4 | 5 |
| Composition (% by weight) | Isopropyl alcohol | 20 | 20 | 30 | - | 90 |
| | Ethylene glycol | 60 | 60 | - | 70 | - |
| | Water | 20 | 20 | 70 | 30 | 10 |
| | Spacer particles | 0. 5 | 6. 0 | 0.5 | 0. 5 | 0. 5 |

EP 1 489 455 A1

Table 2

| | Dispersion of spacer particles | Surface tension (mN/m) | Dispersibility | Initial substrate temperature (°C) | Hot plate temperature (°C) | Substrate temperature at completion of drying (°C) | Drying-completion time (sec) | Diameter $D_1$ of an adhered droplet (μm) | Diameter $D_2$ of adhering spacer particles (μm) | Property of locating spacer particles | Display quality (1) | Display quality (2) | Purity of liquid crystal (%) |
|---|---|---|---|---|---|---|---|---|---|---|---|---|---|
| Example1 | 1 | 35 | ◎ | 45 | 45 | 45 | 13 | 80 | 16 | ◎ | O | ◎ | 100 |
| Example2 | 1 | 35 | ◎ | 45 | 70 | 60 | 8 | 80 | 19 | ◎ | O | ◎ | 100 |
| Example3 | 1 | 35 | ◎ | 20 | 20 | 20 | 1700 | 80 | 25 | ◎ | △ | △ | 100 |
| Example4 | 1 | 35 | ◎ | 20 | 70 | 60 | 15 | 80 | 15 | ◎ | O | ◎ | 100 |
| Example5 | 4 | 64 | O | 20 | 70 | 60 | 35 | 70 | 20 | ◎ | △× | △ | 100 |
| Example6 | 4 | 64 | O | 20 | 90 | 80 | 20 | 70 | 23 | ◎ | △× | △ | 100 |
| Comparative Example1 | 1 | 35 | ◎ | 100 | 100 | 100 | 0.5 | 80 | 110 | △ | ×× | × | 100 |
| Comparative Example2 | 1 | 35 | ◎ | 80 | 80 | 80 | 1 | 80 | 95 | △ | × | × | 100 |
| Comparative Example3 | 1 | 35 | ◎ | 45 | 150 | 100 | 1 | 80 | 130 | △ | ×× | × | 100 |
| Comparative Example4 | 2 | 35 | ◎ | 20 | 70 | 60 | 13 | 100 | 70 | △ | × | × | 100 |
| Comparative Example5 | 3 | 29 | O | 20 | 70 | 60 | 20 | 120 | 80 | △ | × | × | 100 |
| Comparative Example6 | 5 | 29 | ◎ | 20 | 70 | 60 | 1 | - | - | × | - | - | 100 |

(Example 7)

(1) Preparation of spacer particle

To a separable flask, 15 parts by weight of divinylbenzene, 5 parts by weight of isooctyl acrylate and 1.3 parts by weight of benzoyl peroxide as an initiator were charged and mixed uniformly. Next, to this mixture, 20 parts by weight of a 3% by weight aqueous solution of polyvinyl alcohol (trade mark "KURARAY Poval GL-03" made by KURARAY CO., LTD.) and 0.5 parts by weight of sodium dodecyl sulfate were charged and stirred uniformly, and then 140 parts by weight of ion-exchanged water was added. Then, this mixed aqueous solution was polymerized at 80°C for 15 hours under nitrogen flow while being stirred to obtain fine particles. The obtained fine particles were adequately washed with hot water and acetone, and then classified and the acetone was volatilized to obtain spacer particles. An average particle diameter of the obtained spacer particles was 5 μm and a CV value was 3.0%.

(2) Surface treatment of spacer particles

5 parts by weight of the obtained spacer particles was charged to a mixed aqueous solution comprising of 20 parts by weight of ion-exchanged water and 10 parts by weight of hydroxyethyl methacrylate and dispersed with a sonicater, and then the mixture was stirred uniformly. Then, a reaction system was replaced with a nitrogen gas and the mixture was stirred at 30°C for 2 hours. Then, to the reaction system was added 10 parts by weight of a 0.1 mol/ liter aqueous solution of diammonium cerium nitrate ($[Ce(NH_4)_2] (NO_3)_6$) regulated by a 1N aqueous solution of nitric acid, and after a polymerization reaction was conducted for 5 hours, a reactant was taken out and separated into particles and a reaction solution through filtration using a 3 μm membrane filter. The obtained particles were adequately washed with ethanol and acetone and then dried under reduced pressure with a vacuum drier to obtain spacer particles, on the surface of which a vinyl-based thermoplastic resin is formed by graft polymerization.

(3) Preparation of dispersion of spacer particles

The obtained spacer particles was taken by an amount required in such a way that a particle concentration is 0.3% by weight and gradually added to the medium comprising a mixture solution of 20 parts by weight of isopropyl alcohol, 60 parts by weight of ethylene glycol and 20 parts by weight of ion-exchanged water and dispersed uniformly by being adequately stirred with a sonicater, and then the resulting dispersion of spacer particles was filtered with a stainless screen with mesh size of 10 μm and cohesion spacers were removed to prepare a dispersion of spacer particles.

(4) Preparation of substrate

The following three kinds of substrates were prepared using a color filter substrate, in which a black matrix of 15 μm in width was formed between pixels of a color filter and an ITO transparent contact electrode was formed on an overcoat provided on a color layer

1. Substrate A: An orientation layer comprising polyimide resin was uniformly formed on the whole area of the above-mentioned ITO transparent contact electrode of the color filter substrate. On this orientation layer, laser processing was applied in the form of stripe of 8 μm in width to the black matrix portion of the color filter as shown in Fig.2, and a surficial orientation layer (polyimide resin) was removed to prepare a substrate A exposing the ITO as a substrate. A contact angle θa of the exposed ITO surface of the substrate A obtained relative to the dispersion of spacer particles obtained in a paragraph (3) was 25°, and a contact angle θb of the surficial orientation layer relative to the dispersion of spacer particles obtained in a paragraph (3) was 50°.
2. Substrate B: By applying a photosensitive polyimide resin precursor to the whole area of the above-mentioned ITO transparent contact electrode of the color filter substrate, exposing the photosensitive polyimide film through the medium of a mask and developing the film, a substrate B, in which in the black matrix portion of the color filter, an orientation layer comprising polyimide resin was not formed and the ITO as a substrate was exposed in the form of stripe of 8 μm in width, as shown in Fig.2, was prepared. A contact angle θa of the exposed ITO surface of the substrate B obtained relative to the dispersion of spacer particles obtained in a paragraph (3) was 25°, and a contact angle θb of the surficial orientation layer (polyimide resin) relative to the dispersion of spacer particles obtained in a paragraph (3) was 45°.
3. Substrate C: By following the same procedure as in the paragraph 1 except for not applying laser processing, a substrate C, in which an orientation layer comprising polyimide resin was formed on the whole area of an ITO transparent contact electrode, was prepared. A contact angle θb of the surficial orientation layer (polyimide resin) of the substrate C obtained relative to the dispersion of spacer particles obtained in a paragraph (3) was 50°.

(5) Locating spacer particles on substrate

A dispersion of spacer particles of 35 pL was ejected at 120 μm spacing onto the ITO surface (contact angle θa relative to the dispersion of spacer particles: 25°) in the form of stripe on the substrate A (color filter substrate), which was exposed by applying laser processing, using an ink-jet system of a piezo ink-jet method, on which a head having a nozzle hole diameter of 30 μm is mounted, and then it was dried, and the spacer particles were located to prepare a substrate A (color filter substrate) in which the spacer particles were located. In addition, the spacer particle was adjusted and located in such a way that a distribution density of the spacer particles is 150 particles/mm$^2$. During locating the spacer particles, a substrate of room temperature was placed on a stage and the dispersion of spacer particles was ejected, the substrate, to which ejection of spacer particles was completed, was immediately shifted to on a hot plate heated to 90°C and dried. After visually recognizing that the medium was completely dried, the substrate was allowed to stand in an atmosphere of 90°C for 30 minutes and dried completely.

Next, in order to bond a substrate (color filter substrate) in which the spacer particles were located to an opposed array substrate, a peripheral sealing material was printed by a screen printing method, and both substrates were bonded with this sealing material and then the sealing material was cured by heating at 160°C for 90 minutes to produce an empty cell with a cell gap of 5 μm. Then, a predetermined amount of liquid crystal for a TN type was filled into the empty cell by a vacuum method, and after a filling port was sealed with an end-sealing material, the end-sealing material was treated by heat at 120°C for 30 minutes to manufacture a TFT liquid crystal display.

Display quality of the TFT liquid crystal display obtained above was evaluated. As a result, the existence of spacer particle was not found in a pixel area and no defects of display such as light leakage resulting from abnormal orientation of liquid crystal in the vicinity of the spacer particle were found. Incidentally, the evaluation described above was conducted by visually observing the images magnified by an electron microscope with a voltage of 4.2 V applied.

(Example 8)

By following the same procedure as in Example 1 except for using the substrate B (color filter substrate) prepared in Example 7 as a substrate for locating the spacer particles and ejecting the dispersion of spacer particles onto the exposed ITO surface (contact angle θa relative to the dispersion of spacer particles: 25°) in the form of stripe on the substrate B (color filter substrate), a substrate B (color filter substrate) in which the spacer particles were located and a TFT liquid crystal display were manufactured.

Display quality of the obtained TFT liquid crystal display was evaluated in the same manner as in Example 7. As a result, the existence of spacer particle was not found in a pixel area and no defects of display such as light leakage resulting from abnormal orientation of liquid crystal in the vicinity of the spacer particle were found.

(Comparative Example 7)

By following the same procedure as in Example 7 except for using the substrate C (color filter substrate) prepared in Example 7 as a substrate for locating the spacer particles and ejecting the dispersion of spacer particles onto the surface (contact angle θb relative to the dispersion of spacer particles: 50°) of the orientation layer (polyimide resin) on the substrate C (color filter substrate), a substrate C (color filter substrate) in which the spacer particles were located and a TFT liquid crystal display were manufactured.

Display quality of the obtained TFT liquid crystal display was evaluated in the same manner as in Example 7. As a result, the existence of some spacer particle was found around a pixel area and light leakage resulting from abnormal orientation of liquid crystal in the vicinity of the spacer particle was found.

Surface tension at 20°C and dispersibility of the dispersions of spacer particles prepared in Example 7 and 8 and Comparative Example 7, a property of locating spacer particle when the dispersion of spacer particles is ejected onto the substrate, display quality as a liquid crystal display, and purity of liquid crystal were evaluated in the same manner as that described above. The results of evaluation were shown in Table 3.

Table 3

| | Surface tension (mN/m) | Dispersibility | Property of locating spacer particles | Display quality (1) | Display quality (2) | Purity of liquid crystal (%) |
|---|---|---|---|---|---|---|
| Example7 | 35 | ◎ | ◎ | ○ | ◎ | 100 |
| Example8 | 35 | ◎ | ◎ | ○ | ◎ | 100 |
| Comparative Example 7 | 35 | ◎ | ◎ | Δ | ○ | 100 |

(Example 9)

(1) Preparation of spacer seed particle

To a separable flask, 15 parts by weight of divinylbenzene, 5 parts by weight of isooctyl acrylate and 1.3 parts by weight of benzoyl peroxide as an initiator were charged and mixed uniformly. Next, to this mixture, 20 parts by weight of a 3% by weight aqueous solution of polyvinyl alcohol (trade mark "KURARAY Poval GL-03" made by KURARAY CO., LTD.) and 0.5 parts by weight of sodium dodecyl sulfate were charged and stirred uniformly, and then 140 parts by weight of ion-exchanged water was added. Then, this aqueous solution was polymerized at 80°C for 15 hours under nitrogen flow while being stirred to obtain fine particles. The obtained fine particles were adequately washed with hot water and acetone, and then classified and the acetone was volatilized to obtain spacer seed particles. An average particle diameter of the obtained spacer seed particles was 5 μm and a CV value was 3.0%.

(2) Preparation of spacer particles

5 parts by weight of the obtained spacer seed particles was charged to mixed monomers comprising 20 parts by weight of dimethyl sulfoxide, 10 parts by weight of hydroxy methacrylate, 8 parts by weight of i-butyl methacrylate and 2 parts by weight of methacrylic acid and dispersed with a sonicater, and then the mixture was stirred uniformly. Next, a reaction system was replaced with a nitrogen gas and the mixture was stirred at 30°C for 2 hours. Then, to the reaction system was added 10 parts by weight of a 0.1 mol/liter aqueous solution of diammonium cerium nitrate ( [Ce(NH$_4$)$_2$] (NO$_3$)$_6$) regulated by a 1N aqueous solution of nitric acid, and after a polymerization reaction was conducted for 5 hours, a reactant was taken out and separated into particles and a reaction solution through filtration using a 3 μm membrane filter. The obtained particles were adequately washed with ethanol and acetone and then dried under reduced pressure with a vacuum drier to obtain spacer particles (A), in which a vinyl-based thermoplastic resin is formed on the surface of the spacer seed particle by graft polymerization.

(3) Preparation of medium

60 parts by weight of ethylene glycol, 20 parts by weight of isopropyl alcohol and 20 parts by weight of ion-exchanged water were uniformly mixed and stirred to prepare a medium (a).

(4) Preparation of spacer dispersion

0.5 parts by weight of the spacer particles (A) was gradually added to 100 parts by weight of medium (a), and uniformly mixed and stirred with a sonicater to prepare a dispersion of spacer.

(5) Evaluation

Surface tension at 20°C and dispersibility of the dispersions of spacer particles prepared in Examples 9 to 13 and Comparative Examples 8 to 10, a property of locating spacer particle when the dispersion of spacer particles is ejected onto the substrate, display quality as a liquid crystal display, and purity of liquid crystal were evaluated in the same manner as that described above.

The results of evaluation were shown in Table 6.

(Examples 10 to 13, Comparative Examples 8 to 10)

By following the same procedure as in Example 9 except for changing the composition of the mixed monomers to the composition shown in Table 4, a spacer (B) to a spacer (D), in which a vinyl-based thermoplastic resin is formed on the surface of the spacer seed particle by graft polymerization, were prepared.

And, mixed monomers comprising 10 parts by weight of hydroxyethyl methacrylate, 8 parts by weight of i-butyl methacrylate and 2 parts by weight of methacrylic acid was free radical polymerized in an ethyl acetate solution, and then ethyl acetate was removed by drying under reduced pressure to yield a solid resin, and the solid resin was milled to obtain resin powder. Next, by using 2 parts by weight of the obtained resin powder and 5 parts by weight of the spacer seed particle prepared in Example 9, and following the same manner as in Example 1 described in Japanese Kokai Publication 2000-347191, a spacer (E), in which a coating layer is formed on the surface of the spacer seed particle by shock wave polymerization in high-velocity airflow, was prepared.

On the other hand, by following the same procedure as described above except for changing the composition of the medium to the composition shown in Table 5, a medium (b) to a medium (d) were prepared.

By following the same procedure as in Example 9 except for changing a combination of a spacer and a medium to the combination shown in Table 6, dispersions of spacer particles were prepared and subjected to an evaluation test.

The results of evaluation were shown in Table 6.

Table 4

| | | Spacer particles | | | | |
|---|---|---|---|---|---|---|
| | | A | B | C | D | E |
| Spacer seed particles (part by weight) | | 5 | 5 | 5 | 5 | 5 |
| Composition of mixed monomers (part by weight) | Isobutyl methacrylate | 8 | 14 | 2 | 4 | 0.8 |
| | Lauryl methacrylate | – | – | – | 4 | – |
| | Methyl methacrylate | – | – | – | – | – |
| | Hydroxyethyl methacrylate | 10 | 6 | 18 | 10 | 1 |
| | Methacrylic acid | 2 | – | – | 2 | 0.2 |
| | Dimethyl sulfoxide | 20 | 20 | 20 | 20 | – |
| Preparation method | | Graft polymerization | Graft polymerization | Graft polymerization | Graft polymerization | Shock wave polymerization in high-velocity airflow |

Table 4

| | | Spacer particles | | | | |
| --- | --- | --- | --- | --- | --- | --- |
| | | A | B | C | D | E |
| Spacer seed particles (part by weight) | | 5 | 5 | 5 | 5 | 5 |
| Composition of mixed monomers (part by weight) | Isobutyl methacrylate | 8 | 14 | 2 | 4 | 0.8 |
| | Lauryl methacrylate | – | – | – | 4 | – |
| | Methyl methacrylate | – | – | – | – | – |
| | Hydroxyethyl methacrylate | 10 | 6 | 18 | 10 | 1 |
| | Methacrylic acid | 2 | – | – | 2 | 0.2 |
| | Dimethyl sulfoxide | 20 | 20 | 20 | 20 | – |
| Preparation method | | Graft polymerization | Graft polymerization | Graft polymerization | Graft polymerization | Shock wave polymerization in high-velocity airflow |

Table 5

| | | Medium | | | |
|---|---|---|---|---|---|
| | | a | b | c | d |
| Composition (part by weight) | Isopropyl alcohol | 20 | 50 | 5 | 70 |
| | Ethylene glycol | 60 | - | 40 | - |
| | Ion-exchanged water | 20 | 50 | 55 | 30 |
| Surface tension at 20°C (mN/m) | | 35 | 27 | 53 | 23 |

Table 6

| | Dispersion of spacer particles | | Surface tension (mN/m) | Dispersibility | Evaluation | | | |
|---|---|---|---|---|---|---|---|---|
| | Spacer particles | Medium | | | Property of location spacer particles | Display quality of liquid crystal display cell (1) | Display quality of liquid crystal display cell (2) | Purity of liquid crystal (%) |
| Example9 | A | a | 35 | ◎ | ◎ | ○ | ◎ | 100 |
| Example10 | B | a | 35 | △ | ○ | △ | ○ | 100 |
| Example11 | C | a | 35 | ◎ | ◎ | ○ | ◎ | 100 |
| Example12 | D | a | 35 | ○ | ○ | △ | ○ | 100 |
| Example13 | A | b | 27 | ◎ | △ | △ | ○ | 100 |
| Comparative Example8 | C | c | 53 | ◎ | × | △ | × | 100 |
| Comparative Example9 | A | d | 23 | △ | × | × | × | 100 |
| Comparative Example10 | E | a | 35 | ◎ | ◎ | ○ | ◎ | 99.5 |

As is evident from Tables 4 to 6, the dispersions of spacer particles of Examples 9 to 13 exhibited good or excellent performances with respect to all the dispersibility, the property of locating spacer particle, the display quality of a liquid crystal display cell and the purity of liquid crystal.

On the other hand, since the dispersion of spacer of Comparative Example 8, in which the surface tension at 20°C of the medium exceeded 50 mN/m, and the dispersion of spacer of Comparative Example 9, in which the surface tension at 20°C of the medium is less than 25 mN/m both were poor in the property of locating spacer on the substrate, the display quality of a liquid crystal display cell thereof could not be evaluated. And, the dispersion of spacer of Comparative Example 10, in which the spacers prepared not by graft polymerization but by shock wave ' polymerization in high-velocity airflow was used, had a low purity of liquid crystal.

INDUSTRIAL APPLICABILITY

In accordance with the present invention, it is possible to provide the method for manufacturing a liquid crystal display, the substrate for a liquid crystal display, the method for manufacturing the substrate for a liquid crystal display, and the dispersion of spacer particles, in which a spacer particle can be precisely located at an arbitrary position on a substrate by an ink-jet method.

**Claims**

1. A method for manufacturing a liquid crystal display,
   wherein spacer particles are located at an arbitrary position on a substrate by ejecting a dispersion of spacer particles by an ink-jet method,
   a diameter $D_1$ of an adhered droplet of said dispersion of spacer particles, having adhered to said substrate, and a diameter $D_2$ of the adhering spacer particles, remaining after the said dispersion of spacer particles is evaporated, satisfying a relationship of Equation (1).

$$D_2 < (D_1 \times 0.5) \tag{1}$$

2. The method for manufacturing a liquid crystal display according to Claim 1,
   wherein the surface temperature of a substrate at the time when a dispersion of spacer particles adheres to the substrate is at least 20°C lower than a boiling point of a liquid having the lowest boiling point among liquids contained in said dispersion of spacer particles.

3. The method for manufacturing a liquid crystal display according to Claim 1,
   wherein the surface temperature of a substrate at the time when a dispersion of spacer particles adheres to the substrate is at least 20°C lower than a boiling point of a liquid having the lowest boiling point among liquids contained in said dispersion of spacer particles, and the surface temperature of a substrate is 90°C or less during a time period until the dispersion of spacer particles is completely evaporated.

4. The method for manufacturing a liquid crystal display according to Claim 1, 2 or 3,
   wherein a dispersion of spacer particles comprises a medium containing a liquid having a boiling point of less than 100°C in an amount of 10 to 80% by weight and spacer particles, and the content of said spacer particle is 0.05 to 5% by weight.

5. The method for manufacturing a liquid crystal display according to Claim 1, 2 or 3,
   wherein a dispersion of spacer particles comprises a medium containing a liquid having a boiling point of less than 100°C in an amount of 10 to 80% by weight and a liquid having a boiling point of 150°C or more in an amount of 80 to 10% by weight, and spacer particles, and the content of said spacer particle is 0.05 to 5% by weight.

6. The method for manufacturing a liquid crystal display according to Claim 1, 2, 3, 4 or 5,
   wherein the dispersion of spacer particles has a contact angle of 25 to 70° relative to an orientation layer on a substrate.

7. A substrate for a liquid crystal display,
   wherein a color filter comprising a pixel area arrayed in accordance with a given pattern and a shading area defining said pixel area is formed,
   an orientation layer, a contact angle of which relative to the dispersion of spacer particles is θb, being present in an area representing said pixel area and, an area, a contact angle of which relative to the dispersion of spacer particles is θa, being present at least in a part of an area representing said shading area, and said θa and said θb satisfying a relationship expressed by Equation (2).

$$\theta a < \theta b \qquad (2)$$

8. A method for manufacturing the substrate for a liquid crystal display according to Claim 7,
    wherein after an orientation layer, a contact angle of which relative to the dispersion of spacer particles is θb, is uniformly formed on the whole surface of a substrate, by applying non-contact energy irradiation to a position at which the spacer particle is chosen to be locate, the orientation layer in the position is removed or modified to bring a contact angle relative to the dispersion of spacer particles into θa.

9. A method for manufacturing the substrate for a liquid crystal display according to Claim 7,
    wherein a photosensitive polyimide resin precursor or a photosensitive polyimide resin is uniformly applied to a substrate having a surface, a contact angle of which relative to the dispersion of spacer particles is θa, and by exposing the photosensitive polyimide film via the medium of a mask and developing the film, an orientation layer comprising polyimide resin is formed in the form of a pattern on the surface of the substrate other than the position at which the spacer particle is chosen to be locate and a contact angle of the surface of said orientation layer relative to the dispersion of spacer particles is brought into θb.

10. A method for manufacturing a liquid crystal display using the substrate for a liquid crystal display according to Claim 7,
    wherein the dispersion of spacer particles is ejected onto the area where a contact angle of said substrate for a liquid crystal display relative to the dispersion of spacer particles is θa to locate the spacer particles.

11. A dispersion of spacer particles,
    which comprises spacer particles in which a vinyl-based thermoplastic resin, formed by free radical polymerizing vinyl-based monomers having a hydrophilic functional group and/or an alkyl group having 3 to 22 carbon atoms, is combined with the surface of an inorganic fine particle and/or an organic fine particle by graft polymerization; and
    a medium comprising water and/or a hydrophilic organic solvent and having the surface tension of 25 to 50 mN/m at 20°C,
    said spacer particles being dispersed in the form of a single particle in said medium.

12. The dispersion of spacer particles according to Claim 11,
    wherein the vinyl-based monomer contains a vinyl-based monomer having a hydrophilic functional group in an amount of 30 to 80% by weight and a vinyl-based monomer having an alkyl group having 3 to 22 carbon atoms in an amount of 20 to 60% by weight.

13. The dispersion of spacer particles according to Claim 11 or 12,
    wherein the hydrophilic functional group is at least one species selected from the group consisting of hydroxyl group, carboxyl group, sulfonyl group, phosphonyl group, amino group, amide group, ether group, thiol group and thioether group.

Fig.1

Fig.2

8μm in width

15μm in width

Pixel area

Area without
orientation layer
(shading area)

Black matrix
(shading area)

| **INTERNATIONAL SEARCH REPORT** | International application No. |
|---|---|
| | PCT/JP03/03699 |

**A. CLASSIFICATION OF SUBJECT MATTER**
Int.Cl⁷ G02F1/1339

According to International Patent Classification (IPC) or to both national classification and IPC

**B. FIELDS SEARCHED**

Minimum documentation searched (classification system followed by classification symbols)
Int.Cl⁷ G02F1/1339

Documentation searched other than minimum documentation to the extent that such documents are included in the fields searched
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-188235 A (Seiko Epson Corp.), 10 July, 2001 (10.07.01), Full text; all drawings (Family: none) | 1-6 |
| X | JP 2001-051280 A (Ube-Nitto Kasei Co., Ltd.), 23 February, 2001 (23.02.01), Full text; all drawings (Family: none) | 7-8 |
| Y | | 9-10 |
| Y | JP 09-043612 A (Hitachi, Ltd.), 14 February, 1997 (14.02.97), Full text; all drawings (Family: none) | 9 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July, 2003 (08.07.03) | 22 July, 2003 (22.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/03699 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-024083 A  (Asahi Glass Co., Ltd.), 29 January, 1999 (29.01.99), Full text; all drawings (Family: none) | 10 |
| X | JP 7-300587 A  (Natoco Paint Co., Ltd.), 14 November, 1995 (14.11.95), Full text; all drawings (Family: none) | 11-13 |
| X | JP 10-226512 A  (Ube-Nitto Kasei Co., Ltd.), 25 August, 1998 (25.08.98), Full text; all drawings (Family: none) | 11-13 |

Form PCT/ISA/210 (continuation of second sheet) (July 1998)

**EP 1 489 455 A1**

## INTERNATIONAL SEARCH REPORT

International application No.

PCT/JP03/03699

| Box I   Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box II   Observations where unity of invention is lacking (Continuation of item 3 of first sheet) |

This International Searching Authority found multiple inventions in this international application, as follows:
```
   The invention of claims 1-6 relates to the landing diameter of a spacer particle
dispersion.
   The invention of claim 7-10 relates to the angle of contact of the spacer particle
dispersion in a pixel area and a light-shielding area.
   The invention of claims 11-13 relates to the material of the surface of spacer
particles and the material of a medium.
```

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest.
☒ No protest accompanied the payment of additional search fees.

Form PCT/ISA/210 (continuation of first sheet (1)) (July 1998)